(19) Europäisches Patentamt
European Patent Office
Office européen des brevets

(11) **EP 3 235 859 B1**

(12) **EUROPEAN PATENT SPECIFICATION**

(45) Date of publication and mention
of the grant of the patent:
**18.11.2020 Bulletin 2020/47**

(21) Application number: **15870023.7**

(22) Date of filing: **16.12.2015**

(51) Int Cl.:
*C08J 5/18* (2006.01)       *B29C 55/12* (2006.01)
*B32B 15/088* (2006.01)      *B32B 27/34* (2006.01)
*B65D 65/40* (2006.01)       *C08J 7/04* (2020.01)
*B29K 77/00* (2006.01)       *B29L 7/00* (2006.01)

(86) International application number:
**PCT/JP2015/085257**

(87) International publication number:
**WO 2016/098821 (23.06.2016 Gazette 2016/25)**

(54) **POLYAMIDE FILM AND METHOD FOR PRODUCING SAME**

POLYAMIDFILM UND VERFAHREN ZUR HERSTELLUNG DAVON

FILM POLYAMIDE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2014 JP 2014255107**

(43) Date of publication of application:
**25.10.2017 Bulletin 2017/43**

(73) Proprietor: **Unitika, Ltd.
Amagasaki-shi, Hyogo 660-0824 (JP)**

(72) Inventor: **MATSUMOTO, Masami
Uji-shi
Kyoto 611-0021 (JP)**

(74) Representative: **Müller-Boré & Partner
Patentanwälte PartG mbB
Friedenheimer Brücke 21
80639 München (DE)**

(56) References cited:
**EP-A2- 0 386 759          WO-A1-2009/069307
WO-A1-2010/110282      WO-A1-2014/084248
JP-A- H03 128 225        JP-A- 2000 198 139
JP-A- 2002 029 015       JP-A- 2006 088 690
JP-A- 2010 070 217**

**Description**

The present invention relates to method for producing a novel polyamide-based film and a polyamide-based film obtainable by the same. Moreover, the present invention relates to a laminate and a container including the above-mentioned polyamide-based film.

Various types of resin films are formed into packages and various other types of products by undergoing various processing. For example, vinyl chloride film is used in packages (press-through packs) for containing pharmaceuticals (tablets), etc. In addition, polypropylene film is used in the case of packaged contents requiring protection from moisture, for example. Recently, laminates in which metal foil is laminated on a resin film are being used for the purpose of imparting even better gas impermeability and moisture-proofing from the viewpoint of maintaining content quality. For example, a laminate formed of "base layer(resin film)/metal foil layer(aluminum foil)/sealant layer" is known.

In industrial fields, although the outer casings of lithium ion batteries have conventionally primarily consisted of a metal can type, this type of outer casing has been indicated as having shortcomings such as a lack of degree of freedom with respect to shape and difficulty in reducing weight. Consequently, a laminate formed of "base layer/metal foil layer/sealant or a laminate formed of "base layer/additional base layer/metal foil layer/sealant layer" has been proposed for use as an outer casing. These types of laminates have come to be widely used due to their flexibility and greater degree of freedom with respect to shape in comparison with metal cans, their potential for reducing weight by reducing film thickness, and the ease by which they can be reduced in size.

Various performance requirements are placed on laminates used in the above-mentioned applications, and moisture resistance is an extremely important parameter. However, metal foil such as aluminum foil that imparts moisture resistance lacks ductility when used alone and has inferior moldability. Consequently, extensibility is imparted to enhance moldability by using a polyamide-based film as the resin film that composes the base layer.

In this case, moldability refers to formability during cold forming (cold processing) of a film in particular. Namely, when producing a product by molding a film, although molding conditions including a) hot forming that involves molding the resin after melting by heating, and b) cold forming that involves molding the resin while still in the form of a solid without melting, formability with respect to cold forming (and particularly drawing molding and bulging molding) is required in the above-mentioned applications. Cold forming is a molding method, which in addition to being superior in terms of production speed and costs since it does not have a heating step, is also advantageous over hot forming in that it is able to take advantage of the inherent characteristics of resins. Consequently, polyamide-based films are being developed for use as films suitable for cold forming.

Stretched polyamide-based films are known to be an example of such polyamide-based films (see, for example, Patent documents 1 and 2). However, these polyamide-based films are produced by stretching using a tubular method. Namely, not only do such films have low productivity, but they also are unable to adequately satisfy requirements such as thickness uniformity or dimensional stability. In the case of unevenness of film thickness in particular, when a laminate of this film and metal foil is attempted to be processed by cold forming, there is the risk of the occurrence of fatal defects such as breakage of the metal foil and the formation of pinholes.

In contrast, polyamide-based films have also been proposed that are stretched using the tenter method (see, for example, Patent documents 3 to 10). The tenter method is advantageous to the tubular method in terms of productivity, dimensional stability and the like. Patent document 11 describes a process for producing biaxially oriented nylon film. Patent document 12 discloses the production of a biaxially oriented nylon 66 film. Patent document 13 describes a heat-shrinkable biaxially drawn polyamide film and process for preparation thereof. Patent document 14 discloses a gas barrier resin film. Patent document 15 describes a polyamide film and preparation method thereof.

[Patent document 1] Japanese Patent No. 5487485
[Patent document 2] Japanese Patent No. 5226942
[Patent document 3] Japanese Patent No. 5467387
[Patent document 4] Japanese Patent Application publication No. 2011-162702
[Patent document 5] Japanese Patent Application Publication No. 2011-255931
[Patent document 6] Japanese Patent Application Publication No. 2013-189614
[Patent document 7] Japanese Patent No. 5226941
[Patent document 8] Japanese Patent Application Publication No. 2013-22773
[Patent document 9] WO 2014/084248
[Patent document 10] Japanese Patent No. 3671978
[Patent document 11] EP 0 386 759 A2
[Patent document 12] JP H03/128225 A
[Patent document 13] US 4 753 842 A
[Patent document 14] US 5 939 205 A

[Patent document 15] CN 102 190 120 A

However, unevenness (anisotropy) in properties in each direction of the film are still present even in polyamide-based films stretched using the tenter method. Accordingly, these films cannot be said to have sufficiently satisfactory performance in terms of formability during cold forming (and particularly deep drawing molding).

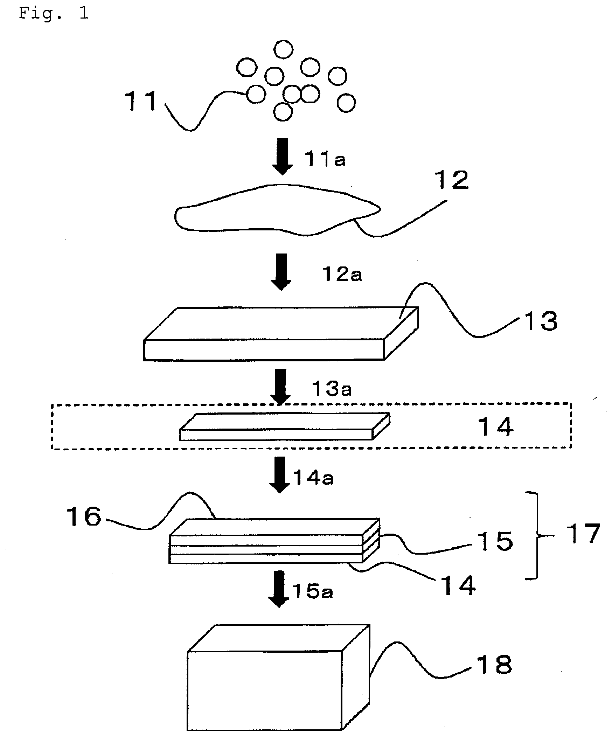

A polyamide-based film 14 is produced according to a process like that shown in Fig. 1. First, a molten mixture 12 is prepared by melting a raw material 11 in a melting and mixing step 11a. An unstretched sheet 13 is obtained by molding the molten mixture 12 into the form of a sheet by a molding step 12a. Next, the polyamide-based film 14 is obtained by biaxially stretching the unstretched sheet 13 in a stretching step 13a. Further, the polyamide-based film 14 goes through, for example, a lamination step 14a in which a metal foil layer 15 and a sealant film 16 are laminated in that order, whereby a laminate 17 is fabricated, and then the laminate 17 is processed into a prescribed shape in a cold forming step 15a as secondary processing, to obtain various types of products 18 (such as a container).

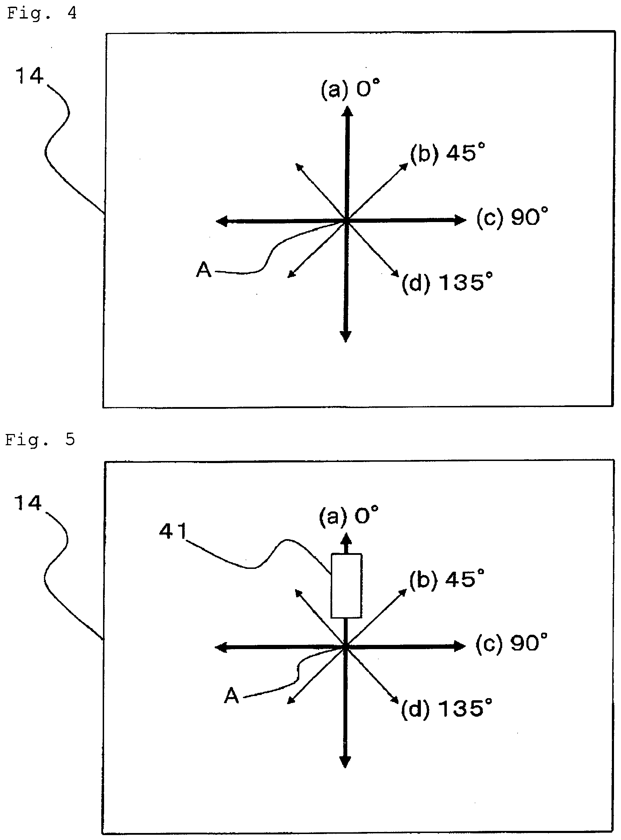

In this type of stretched polyamide-based film 14, although it is desirable to reduce non-uniformities in properties in each direction throughout the plane thereof, it is preferable to reduce variation in properties in at least four directions every 90 degrees (total of four directions formed of an arbitrary direction serving as a reference (0 degrees) and directions at 45 degrees, 90 degrees and 135 degrees relative thereto moving clockwise). In a biaxially stretched polyamide-based film as shown in Fig. 4 for example, if a MD (direction of film flow) during biaxial stretching is taken to be a reference direction (0 degree direction) centering on an arbitrary point A, it is desirable to eliminate variation in properties in the four directions formed of (a) the reference direction (0 degree direction), (b) the direction at 45 degrees relative to the MD in the clockwise direction (to be referred to as the "45 degree direction"), (c) the direction at 90 degrees relative to the MD in the clockwise direction (TD: a direction perpendicular to the direction of film flow) (to be referred to as the "90 degree direction"), and (d) the direction at 135 degrees relative to the MD in the clockwise direction (to be referred to as the "135 degree direction").

In the case of supplying the laminate 17 including the stretched polyamide-based film 14 to the cold forming step 15a, since the polyamide-based film 14 is stretched in all directions. In the case there are variations in the properties of the polyamide-based film in the above-mentioned four directions, it is difficult to equally stretch the film in all directions during cold forming. Namely, since there are directions in which the film stretches easily and directions in which it stretches with difficulty, the metal foil breaks, delamination occurs or pinholes form. When such problems occur, the resulting stretched film is unable to fulfill the function of a package and the like, or there is the risk of damage to the packaged object (contents). Consequently, it is necessary to reduce non-uniformities in properties in each direction as much as possible.

In this case, film thickness is one of the properties that has an effect on moldability during cold forming. In the case of cold-forming a laminate including a polyamide-based film in which there are variations in film thickness, there is a high risk of breakage of relatively thin portions, the formation of pinholes or the occurrence of delamination. Accordingly, it is essential that a polyamide-based film used in cold forming be such that the thickness thereof is controlled to be uniform throughout the entire film.

With respect to uniformity of the thickness of polyamide-based films, although thickness uniformity is superior in the case of having stretched the film using the tenter method in comparison with stretching using the tubular method, the thickness accuracy of the polyamide-based films obtained according to the above-mentioned Patent documents 3 to 10 is not sufficiently satisfactory. In other words, since it is necessary to equally stretch in four vertical, horizontal and diagonal directions as previously described during cold forming, the film is required to have sufficient thickness uniformity for withstanding cold forming. In particular, the effect of thickness uniformity on moldability becomes more prominent the thinner the film thickness (and particularly, film thickness of 15 $\mu$m or less).

In general, since it becomes easier to ensure the thickness uniformity of a film the greater the thickness thereof, designing a film to be comparatively thick has been considered as a means for ensuring thickness uniformity. In recent years, however, polyamide-based films and laminates thereof used for cold forming have come to be widely used primarily in the outer casings of lithium ion batteries, and the thickness of polyamide-based films is being required to be further reduced accompanying requirements for higher output, reduced size and lower costs of these batteries. However, if thickness is reduced, it becomes that much more difficult to ensure thickness uniformity.

In this manner, although the development of a polyamide-based film is desired which, in addition to being thinner and having superior thickness uniformity, has comparatively little variation in properties in the above-mentioned four directions, such a film currently yet remains to be developed.

Thus, an object of the present invention is to provide a production method for a polyamide-based film, which in addition to having superior thickness uniformity, effectively reduces variations in properties in the above-mentioned four directions, and to provide a polyamide-based film obtainable thereby.

As a result of conducting extensive studies in consideration of the problems of the prior art, the inventor of the present invention found that the above-mentioned object can be achieved based on the finding that a polyamide-based film having unique properties can be obtained by employing a specific production method, thereby leading to completion of the present invention.

Namely, the present invention relates to the production method of a polyamide-based film and the polyamide-based film obtainable thereby as defined in the claims.

The polyamide-based film of the present invention has superior thickness uniformity in addition to superior stress balance during elongation in four directions formed of the 0 degree direction, 45 degree direction, 90 degree direction and 135 degree direction in the clockwise direction based on an arbitrary direction. Consequently, in a laminate obtained by laminating the film of the present invention and metal foil, for example, the metal foil has favorable ductility, and when carrying out drawing molding by cold forming (and particularly deep drawing molding or bulging molding), breakage of the metal foil, delamination, pinhole formation and the like are effectively reduced or prevented, thereby allowing the obtaining of a high-quality product (molded body) having high reliability.

In particular, even if the thickness is extremely thin at, for example, 15 μm or less, the polyamide-based film of the present invention has superior thickness uniformity and superior stress balance during elongation in the above-mentioned four directions. As a result, a laminate obtained by laminating this film with metal foil allows the obtaining of compact products at high output by cold forming and is advantageous in terms of cost.

In addition, according to the production method of the present invention, a polyamide-based film having the superior characteristics described above can be produced both efficiently and reliably. In particular, a film having superior thickness uniformity can be provided even if the film thickness is extremely thin at, for example, 15 μm or less. Moreover, in the case of stretching at a comparatively low temperature, a film and laminate can be provided that are even more suitable for cold forming as a result of being able to more effectively maintain the inherent properties of resins.

[Brief Description of Drawings]

[Fig. 1] Fig. 1 is a schematic diagram showing an overview of a production step and cold processing step of the polyamide-based film of the present invention.
[Fig. 2]

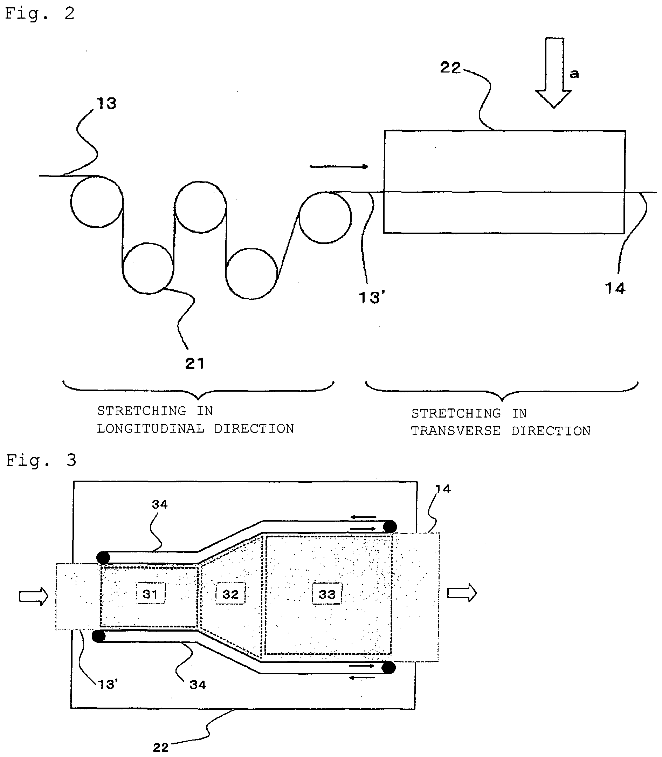

Fig. 2 is a schematic diagram showing a step in which an unstretched sheet is stretched by successive biaxial stretching according to the production method of the present invention.
[Fig. 3]
Fig. 3 is a drawing showing a tenter stretching step as viewed from direction a of Fig. 2.
[Fig. 4]
Fig. 4 is a drawing showing the directions in which stress is measured in a film.
[Fig. 5]
Fig. 5 is a drawing showing a sample for measuring stress in a film.
[Fig. 6]

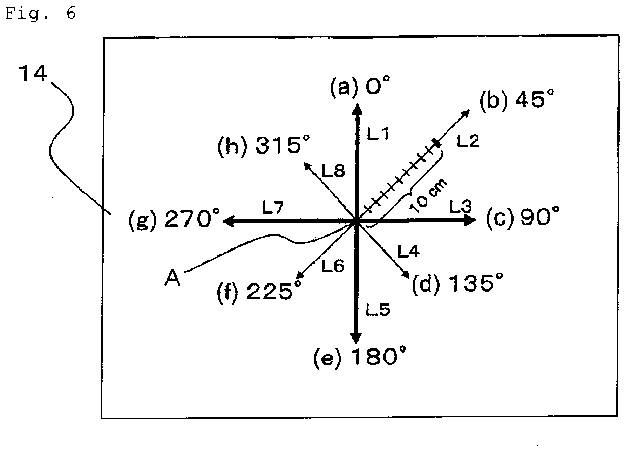

Fig. 6 is a drawing showing directions in which average thickness is measured in a film.

1. Polyamide-based Film

The polyamide-based film of the present invention (film of the present invention) is a polyamide-based film, wherein

(1) the difference (A value) between the maximum value and minimum value of the respective stress at 5% elongation as determined by a uniaxial tensile test is 35 MPa or less in four directions formed of a specific direction from an arbitrary point in the film that is designated as 0 degrees and directions at 45 degrees, 90 degrees and 135 degrees relative to the specific direction in the clockwise direction,
(2) the difference (B value) between the maximum value and the minimum value of the respective stress at 15% elongation as determined by the uniaxial tensile test in the above-mentioned four directions is 40 MPa or less, and
(3) the value of standard deviation with respect to average thickness in eight directions formed of a specific direction from an arbitrary point in the film that is designated as 0 degrees and directions at 45 degrees, 90 degrees, 135 degrees, 180 degrees, 225 degrees, 270 degrees and 315 degrees relative to the specific direction is 0.200 or less.

(A) Material and Composition of Film of Present Invention

The film of the present invention is a film having a polyamide resin as the main component thereof. Polyamide resins are polymers formed by amide bonding of a plurality of monomers. Typical examples thereof include Nylon 6, Nylon 6,6, Nylon 6,10, Nylon 11, Nylon 12 and poly(metaxyleneadipamide). In addition, they may also be two-dimensional or multidimensional copolymers such as Nylon 6/Nylon 6,6, Nylon 6/Nylon 6,10, Nylon 6/Nylon 11 or Nylon 6/Nylon 12. In addition, they may also be mixtures thereof. Among the above-mentioned examples, a) homopolymers of Nylon 6, b) copolymers containing Nylon 6, or c) mixtures thereof are preferable from the viewpoints of cold formability, strength, cost, and the like.

There are no particular limitations on the number average molecular weight of the polyamide resin, and although it can be varied corresponding to such factors as the type of polyamide resin used, it is normally about 10,000 to 40,000 and particularly preferably about 15,000 to 25,000. The use of a polyamide resin having a number average molecular weight within these ranges makes it possible to more reliably avoid crystallization which may occur in the case of stretching at a comparatively high temperature, resulting decreases in cold formability and the like, as a result of facilitating stretching at a comparatively low temperature.

The content of polyamide resin in the film of the present invention is normally 90% by mass to 100% by mass, preferably 95% by mass to 100% by mass and more preferably 98% by mass to 100% by mass. Namely, components other than polyamide resin may be contained as necessary in a range that does not substantially adversely affect the advantages of the present invention. For example, one type or two or more types of various additives such as bending and pinhole resistance improving agents such as polyolefins, polyamide elastomers or polyester elastomers as well as pigments, antioxidants, ultraviolet absorbers, preservatives, antistatic agents or inorganic particles may be added. In addition, at least one type of various types of inorganic lubricants and organic lubricants may be contained as lubricants for imparting slippage. Examples of methods used to add these lubricants (particles) include containing the particles in the polyamide resin serving as raw material and adding the particles directly to an extruding machine, and any one of these methods may be employed or two or more methods may be employed in combination.

(B) Properties of Film of Present Invention

The film of the present invention is preferably that in which the molecular orientation is biaxial. This type of film can basically be obtained by biaxial stretching. A biaxially stretched film obtained by using rollers and a tenter is particularly preferable.

(B-1) Stress Properties

The film of the present invention is required to simultaneously satisfy the above-mentioned A value and B value serving as indicators indicating that stress balance is extremely superior when elongated during secondary processing. If the above-mentioned A value and B value exceed the above-mentioned ranges, stress balance of the polyamide-based film in all directions becomes poor and it becomes difficult to obtain uniform moldability. In the case uniform moldability is not obtained, in the case of, for example, cold-forming a laminate obtained by laminating the film of the present invention with metal foil, since adequate ductility is not imparted to the metal foil (namely, it becomes difficult for the polyamide-based film to follow the shape of the metal foil), there is increased susceptibility to the occurrence of problems such as breakage of the metal foil, delamination or the formation of pinholes.

Although the above-mentioned A value is normally 35 MPa or less, it is preferably 30 MPa or less, more preferably 25 MPa or less and most preferably 20 MPa or less. Furthermore, although there are no limitations on the lower limit of the above-mentioned A value, it is normally about 15 MPa.

Although the above-mentioned B value is normally 40 MPa or less, it is preferably 38 MPa or less, more preferably 34 MPa or less and most preferably 30 MPa or less. Furthermore, although there are no limitations on the lower limit of the above-mentioned B value, it is normally about 20 MPa.

In addition, although there are no particular limitations on stress in the above-mentioned four directions at 5% elongation, stress in each direction is preferably within the range of 35 MPa to 130 MPa, more preferably within the range of 40 MPa to 90 MPa and most preferably within the range of 45 MPa to 75 MPa from the viewpoint of cold formability of the laminate.

Although there are also no particular limitations on stress in the above-mentioned four directions at 15% elongation, stress in each direction is preferably within the range of 55 MPa to 145 MPa, more preferably within the range of 60 MPa to 130 MPa and most preferably within the range of 65 MPa to 115 MPa from the viewpoint of cold formability of the laminate.

In the film of the present invention, adequate cold formability may be unable to be obtained in the case stress in the above-mentioned four directions at 5% elongation and 15% elongation is not satisfied.

Stress in the film of the present invention in the above-mentioned four directions is measured in the manner described below. First, after having conditioned the polyamide-based film for 2 hours at 23°C and 50% RH for controlling the moisture content, as shown in Fig. 5, an arbitrary point A on the film is designated as the center point, a reference direction (0 degree direction) of the film is arbitrarily specified, each of the directions at 45 degrees (b), 90 degrees (c) and 135 degrees (d) from the reference direction (a) in the clockwise direction are designated as measuring directions, and strips measuring 100 mm in each of the measuring directions from the center point A and 15 mm in the direction perpendicular to each measuring direction are cut out for use as samples. For example, as shown in Fig. 5, a sample is cut out in the 0 degree direction in the manner of a sample 41 over a range of 30 mm to 130 mm from the center point A (measuring 100 mm long $\times$ 15 mm wide). Samples are similarly cut out for the other directions as well. Stress at 5% elongation and 15% elongation are measured for these samples at a tension speed of 100 mm/min using a tensile tester having a 50 N load cell and a sample chuck attached thereto (Model AG-1S, Shimadzu Corporation). Furthermore, there are no particular limitations on the above-mentioned reference direction, and for example, the MD in the stretching step during film production can be used for the reference direction.

The polyamide-based film of the present invention that satisfies the characteristic values indicated above is a film preferably obtained by a biaxial stretching method that includes a step in which the film is stretched by a tenter in at least one of the longitudinal direction and transverse direction.

In general, biaxial stretching methods include simultaneous biaxial stretching in which the stretching steps in the longitudinal direction and transverse direction are carried out simultaneously, and successive biaxial stretching in which the stretching step in the transverse direction is carried out after having carried out the stretching step in the longitudinal direction. Although stretching in the longitudinal direction is indicated as being carried out first in the previous explanation, stretching in the longitudinal direction or stretching in the transverse direction may be carried out first in the present invention.

The film of the present invention is preferably obtained by successive biaxial stretching from the viewpoint of a greater degree of freedom and the like when setting stretching conditions. Thus, the film of the present invention is preferably obtained by successive biaxial stretching that includes a step in which the film is stretched by a tenter in at least one of the longitudinal direction and transverse direction. In particular, the film of the present invention is preferably produced according to the production method of the present invention to be subsequently described.

(B-2) Average Thickness and Thickness Accuracy

In the film of the present invention, the standard deviation with respect to average thickness in eight directions to be subsequently described, which is used as an indicator indicating that the thickness accuracy (thickness uniformity) of the film of the present invention is extremely high, is normally 0.200 or less, preferably 0.180 or less and even more preferably 0.160 or less. In the case the standard deviation used as an indicator of thickness accuracy as described above is 0.200 or less, variations in thickness of the film surface are extremely small, and in the case of, for example, film thickness of 15 $\mu$m or less, there are no occurrences of problems such as delamination or pinhole formation when using a laminated obtained by laminating the film with metal foil and carrying out deep drawing molding, thereby allowing the obtaining of favorable moldability. In the case the standard deviation exceeds 0.200, due to the low level of thickness accuracy, adequate ductility is unable to be imparted to the metal foil when laminating the film with metal foil, the occurrence of delamination or pinhole formation becomes conspicuous, and favorable moldability is unable to be obtained.

The above-mentioned thickness accuracy is evaluated in the manner described below. After having conditioned the polyamide-based film for 2 hours at 23°C and 50% RH for controlling the moisture content, as shown in Fig. 6, an arbitrary point A on the film is designated as the center point and a reference direction (0 degree direction) of the film is arbitrarily specified, followed by drawing a total of eight lines L1 to L8 each measuring 100 mm from the center point A in eight directions formed of the reference direction (a) and a 45 degree direction (b), 90 degree direction (c), 135 degree direction (d), 180 degree direction (e), 225 degree direction (f), 270 degree direction (g) and 315 degree direction (h) relative to the reference direction in the clockwise direction. Thickness is then measured with a length gauge (Heidenhain-Metro MT1287, Heidenhain Corp.) for each of the lines at 10 mm intervals from the center point (measured at 10 points). An example of measuring at the measuring points (10 points) in the case of measuring L2 in the 45 degree direction is shown in Fig. 6. The average value of measured values obtained at a total of 80 data points obtained by measuring all of the lines is then calculated, and the resulting value is used as the value of average thickness followed by calculating the standard deviation with respect to average thickness. Furthermore, there are no particular limitations on the above-mentioned reference direction, and for example, the MD in the stretching step during film production can be used for the reference direction.

In the present invention, although average thickness and standard deviation are only required to be based on any single point (point A) of the polyamide-based film, in a polyamide-based film that has been wound into a film roll in particular, average thickness and standard deviation are more preferably the film thickness and standard deviation within the above-mentioned ranges at any of the following three points. These three points are formed of a) a location in or close to the center of the wound width that corresponds to half of the wound amount, b) a location near the right end of the wound width that corresponds to half of the wound length, and c) a location near the left end of the wound width that corresponds to close to the end of winding.

In addition, the average thickness of the film of the present invention is preferably 30 $\mu$m or less, and in particular, preferably 25 $\mu$m or less, more preferably 15 $\mu$m or less and most preferably 12 $\mu$m or less.

Although the film of the present invention is preferably a laminate obtained by laminating with metal foil, and it is preferably used in cold forming applications, by carrying out biaxial stretching using a tenter under stretching conditions that satisfy specific conditions as described below, a biaxially oriented film can be obtained that has superior thickness accuracy (such as thickness uniformity) and superior stress balance when elongated in the above-mentioned four directions even in the case of a thin film.

In the case the average thickness of the film exceeds 30 $\mu$m, moldability of the polyamide-based film per se decreases, it may be difficult to use the film for the outer casings of compact batteries, and there is also the risk of this being disadvantageous in terms of cost. On the other hand, although there are no particular limitations on the lower limit of film thickness, if the film thickness is less than 2 $\mu$m, ductility imparted to the metal foil when laminating with metal foil easily becomes inadequate and this results in the risk of inferior moldability. Accordingly, the lower limit of film thickness can be normally about 2 $\mu$m.

Although the polyamide-based film of the present invention is preferably in the form of a laminate obtained by laminating with metal foil for use in cold forming applications, use of the polyamide-based film of the present invention that satisfies the above-mentioned properties makes it possible to impart adequate ductility to metal foil. Due to this effect, moldability during cold forming and the like (and particularly drawing molding (and especially deep drawing molding)) improves, breakage of the metal foil can be prevented, and the occurrence of problems such as delamination or pinhole formation can be reduced or prevented.

It becomes more difficult to impart adequate ductility to metal foil the lower the thickness of the polyamide-based film. In the case of an extremely thin film having a thickness of 20 $\mu$m or less in particular, there are variations in stress during elongation. In addition, since thickness accuracy is low, prominent breakage of the polyamide-based film or metal foil caused by the pressing load applied during cold forming. In other words, since variations in stress during elongation become larger in thinner films and variations in thickness also tend to become larger, a higher degree of control of these parameters is required.

In this case, in the case of conventional production methods using the tubular method or tenter method that are typically used to produce polyamide-based films, it is difficult to produce a film having a thickness of 15 $\mu$m or less that also demonstrates little unevenness in stress during elongation while also having high thickness accuracy. This is also clear since only polyamide-based films having a minimum thickness of 15 $\mu$m are disclosed as specific examples in any of the above mentioned Patent documents 1 to 10.

In contrast, according to the present invention, as a result of employing a specific production method to be subsequently described, a polyamide-based film having superior stress balance during elongation in the above-mentioned four directions and high thickness uniformity can be successfully provided particularly even in the case of a film having a thickness of 15 $\mu$m or less. As a result of being able to provide this type of special polyamide-based film, in the case of, for example, using a laminated obtained by laminating with metal foil in an outer casing of a battery (such as a lithium ion battery), in addition to being able to increase capacity with respect to the number of electrodes or electrolyte and the like, this polyamide-based film is also able to contribute to reduced size and lower costs of the battery per se.

(B-3) Boiling Water Shrinkage and Modulus of Elasticity

Boiling water shrinkage of the film of the present invention is preferably 2.0% to 5.0% in the MD and 2.5% to 5.5% in the TD and more preferably 2.0% to 4.0% in the MD and 2.5% to 4.5% in the TD.

In addition, the modulus of elasticity is preferably 1.5% to 3.0% in the MD and 1.5% to 2.5% in the TD, and more preferably 1.8% to 2.7% in the MD and 1.8% to 2.2% in the TD.

The film of the present invention preferably has a boiling water shrinkage and modulus of elasticity as mentioned above in order to impart adequate ductility to metal foil when the film is laminated with the metal foil. Namely, in the case of having a boiling water shrinkage and modulus of elasticity as described above, higher flexibility is imparted to the polyamide-based film, thereby enabling the polyamide-based film to more effectively impart ductility to the metal foil when laminating the film with metal foil.

In contrast, in the case the boiling water shrinkage is less than 2.0%, since the polyamide-based resin is resistant to deformation and lacks flexibility, there is increased susceptibility to the occurrence of breakage, delamination or the like during cold forming. In addition, if the boiling water shrinkage exceeds 5.5%, since flexibility becomes excessively high, there is the risk of a decrease in moldability as a result of being unable to impart adequate ductility.

If the modulus of elasticity is less than 1.5%, since flexibility becomes excessively high, there may be the risk of a decrease in moldability as a result of being unable to impart adequate ductility. In addition, if the modulus of elasticity exceeds 3.0%, since flexibility is lacking, there is the risk of the occurrence of breakage, delamination or the like during cold forming.

Measurement of boiling water shrinkage in the present invention is carried out in the following manner. After having conditioned the polyamide-based film for 2 hours at 23°C and 50% RH for controlling the moisture content, the MD of the film is specified, the MD direction and the direction perpendicular thereto is designated as the transverse direction (TD), the film is cut out into the shape of a strip measuring 150 mm in the measuring direction from an arbitrary point (inter-reference line distance: 100 mm) and measuring 15 mm in the direction perpendicular to the measuring direction, followed by measuring inter-reference line distance (A) and subjecting the test piece wrapped in gauze to hot water treatment for 5 minutes at 100°C. Following treatment, the test piece is immediately cooled with running water, drained and conditioned for 2 hours at 23°C and 50% RH followed by again measuring inter-reference line distance (B) and calculating shrinkage according to the equation indicated below.

$$\text{Shrinkage} = [(A - B)/A] \times 100$$

In addition, measurement of modulus of elasticity in the present invention is carried out in the following manner. After having conditioned the polyamide-based film for 2 hours at 23°C and 50% RH for controlling the moisture content, the MD of the film is specified, the direction perpendicular to MD is designated as TD, and the film is cut out into the shape of a strip measuring 300 mm in the measuring direction from an arbitrary point (inter-reference line distance: 250 mm) and 15 mm in the direction perpendicular to the measuring direction, followed by measuring at a test speed of 25 mm/min using a tensile tester having a 1 kN load cell and a sample chuck attached thereto (Model AG-IS, Shimadzu Corporation) and calculating modulus of elasticity from the slope of a load-elongation curve.

(B-4) Relative Viscosity

Relative viscosity (25°C) of the film of the present invention is preferably 2.9 to 3.1 and more preferably 2.95 to 3.05. As a result of making relative viscosity to be within these ranges, flexibility and strength are more effectively imparted to the polyamide-based film and adequate ductility is imparted to metal foil when laminated with the metal foil.
In the case relative viscosity is less than 2.9, the resulting film lacks strength, and in addition to it becoming difficult to impart adequate ductility to metal foil when laminating with the metal foil, there is also the risk of it being difficult to form into the shape of a sheet. On the other hand, if the relative viscosity exceeds 3.1, flexibility of the film decreases, and in addition to greater susceptibility to the occurrence of breakage during cold forming (during lamination with the metal foil), pressure loss increases in the barrier filter when passing through an extruding machine, thereby requiring excess extrusion energy and resulting in an increase in production cost.
Measurement of relative viscosity in the present invention indicates the value obtained using an Ubbelohde viscometer from a sample solution obtained by dissolving 0.5 g of a polyamide-based film after stretching in 50 ml of 96% sulfuric acid at 25°C.

(C) Laminate Including Film of Present Invention

The film of the present invention can be used in various applications in the same manner as known or commercially available polyamide-based films. In this case, the film of the present invention can be used as is or after undergoing surface treatment, or can be used in the form of a laminate obtained by laminating with other layers.
In the case of using in the form of a laminate, a typical example thereof is a laminate including the film of the present invention and metal foil laminated on that film (laminate of the present invention). In this case, the film of the present invention and the metal foil may be laminated to as to be in direct contact, or they may be laminated with other layers interposed there between. In the present invention, a laminate obtained by laminating the film of the present invention, metal foil and a sealant film in that order is particularly preferable. In this case, an adhesive layer may or may not be formed between each of the layers.
Although the film of the present invention can be used as is, it particularly preferably has a primer layer (anchor coat (AC) layer) on all or a portion of at least one side of the film surface thereof. In the case of forming such a primer layer, adhesiveness between the polyamide-based film and metal foil can be further enhanced if metal foil is laminated onto a film surface having a primer layer after applying an adhesive thereto. As a result, greater ductility can be imparted to the metal foil. Consequently, in addition to the polyamide-based film or metal foil being more resistant to breakage, the occurrence of delamination, pinhole formation or the like can be more effectively prevented. A film including a primer layer in this manner is also included in the polyamide-based film of the present invention. A detailed explanation of the primer layer is provided in the section entitled "Embodiment of Primer Layer" to be subsequently described.
Although examples of metal foil include metal foil containing various metal elements (such as aluminum, iron, copper or nickel) (the metal foil including alloy foil), pure aluminum foil or aluminum alloy foil is used particularly preferably. Aluminum alloy foil preferably contains iron (in the form an aluminum-iron-based alloy, for example), while other components may be contained within a range that does not impair moldability of the above-mentioned laminate provided they are contained within known content ranges defined in JIS and other standards.

Although there are no particular limitations thereon, the thickness of the metal foil is preferably 15 $\mu$m to 80 $\mu$m and more preferably 20 $\mu$m to 60 $\mu$m.

The sealant film that composes the laminate of the present invention preferably employs a thermoplastic resin having heat sealing ability, as represented by polyethylene, polypropylene, olefin copolymer and polyvinyl chloride. Although there are no limitations on the thickness of the sealant film, normally it is preferably 20 $\mu$m to 80 $\mu$m and more preferably 30 $\mu$m to 60 $\mu$m.

In addition, the laminate of the present invention may also have one or more other layers on the external side (side differing from the side laminated with metal foil) of the film of the present invention that composes the laminate corresponding to the purpose of use and the like. Although there are no particular limitations on the other layers, a polyester film, for example, is preferable. As a result of laminating a polyester film, in addition to being able to enhance heat resistance, withstand voltage, chemical resistance and the like, peel strength can also be enhanced.

There are no particular limitations on the polyester and preferable examples thereof include polyethylene terephthalate (PET), polybutylene terephthalate (PBT) and polyethylene-2,6-naphthalate. Among these, PET is used preferably from the viewpoints of cost and advantageous effect.

The laminate of the present invention can have an adhesive layer interposed between each of the layers. For example, each layer is preferably laminated using an adhesive layer such as a urethane-based adhesive layer or acrylic-based adhesive layer between the polyamide-based film and metal foil, between the metal foil and sealant film, or the like.

In this case, metal foil is preferably laminated on a primer layer when the polyamide-based film of the present invention has a primer layer on at least one side of the film surface thereof. More specifically, the metal foil is preferably laminated on the primer layer with an adhesive layer such as a urethane-based adhesive layer or acrylic-based adhesive layer interposed between the primer layer and the metal foil.

Since the laminate of the present invention contains the film of the present invention in particular, it can be preferably used for cold forming in the form of drawing process (and particularly deep drawing molding or bulging molding). Here, drawing molding specifically refers to a method for molding a bottomed container having, e.g., a cylindrical, rectangular cylindrical or conical shape from a single laminate. Such containers typically have the characteristic of not containing seams.

(D) Container Including Laminate of Present Invention

The present invention encompasses a container including the laminate of the present invention. For example, a container molded using the laminate of the present invention is included in the present invention. Among these, a container obtained by cold forming is preferable. In particular, a container produced by cold forming in the form of drawing molding (drawing processing) or bulging molding (bulging processing) is preferable, while a container produced by deep drawing molding is particularly preferable.

Namely, the container according to the present invention can be more preferably produced by a method for producing a container from the laminate of the present invention that comprises a step for cold-forming the above-mentioned laminate. Thus, a seamless container, for example, can be produced from the laminate of the present invention.

There are no limitations on the cold forming method per se in this case, and can be carried out in accordance with a known method. For example, a method may be employed in which the resin contained in the laminate is molded while still in the state of a solid without melting. Although the temperature during molding may be normal temperature, it is preferably 50°C or lower and particularly preferably 20°C to 30°C.

Specific examples of molding methods (processing methods) that can be preferably employed include drawing moldings such as cylindrical drawing molding, rectangular cylindrical drawing molding, irregular shape drawing molding, conical drawing molding, pyramidal drawing molding or ball head drawing molding. In addition, although drawing processing is classified into shallow drawing molding and deep drawing molding, the laminate of the present invention can also be applied to deep drawing molding in particular.

This drawing molding can be carried out using an ordinary metal mold. For example, drawing molding can be carried out by a method that uses a press machine containing a punch, a die and a blank holder and comprises a) a step of arranging the laminate of the present invention between the die and blank holder, and b) a step of forming the laminate into the shape of a container by pressing the punch onto the laminate.

Since problems such as breakage of the metal foil, delamination and pinhole formation are efficiently inhibited in a container obtained in this manner, a high level of reliability can be obtained. As a result, the container according to the present invention can be used in various applications, including the packaging materials of various types of industrial products. In particular, a molded body obtained by deep drawing molding is preferably used for the outer casing of a lithium ion battery, while a molded body obtained by bulging molding is preferably used for a press-through pack, for example.

<Embodiment of Primer Layer>

The following embodiment can be adopted for the primer layer in the polyamide-based film of the present invention.

Although there are no limitations on the thickness of the primer layer, normally it is preferably 0.01 $\mu$m to 0.10 $\mu$m and more preferably 0.02 $\mu$m to 0.09 $\mu$m. If the thickness of the primer layer is less than 0.01 $\mu$m, it becomes difficult to form a primer layer of uniform thickness on the film. As a result, the effect of improving adhesiveness between the polyamide-based film and metal foil as previously described is inadequate. On the other hand, if the thickness of the primer layer exceeds 0.10 $\mu$m, the effect of favorable adhesiveness between the polyamide-based film and metal foil becomes saturated, which is disadvantageous in terms of cost.

A layer including various types of synthetic resins such as polyurethane resin or acrylic resin can be employed for the primer layer. A primer layer containing polyurethane resin is particularly preferable. This type of polyurethane resin preferably contains, for example, an anionic water-dispersible polyurethane resin. A primer layer containing this resin can be formed by coating an aqueous coating agent containing the above-mentioned resin onto the surface of the polyamide-based film.

The polyurethane resin is a polymer obtained by reacting, for example, a polyfunctional isocyanate and a hydroxyl group-containing compound. Specific examples thereof include urethane resins obtained by reacting a polyfunctional isocyanate, such as an aromatic polyisocyanate such as tolylene diisocyanate, diphenylmethane isocyanate or polymethylene polyphenylene polyisocyanate, or an aliphatic polyisocyanate such as hexamethylene diisocyanate or xylene isocyanate, with a hydroxyl group-containing compound such as a polyether polyol, polyester polyol, polyacrylate polyol or polycarbonate polyol.

The anionic water-dispersible polyurethane resin used in the present invention has an anionic functional group introduced into a polyurethane resin. There are no particular limitations on the method of introducing the anionic functional group into the polyurethane resin, and examples thereof include a) a method that uses, for example, a diol having an anionic functional group as a polyol component, and b) a method that uses, for example, a diol having an anionic functional group as a chain extender.

Examples of diols having an anionic functional group include aliphatic carboxylic acids such as glyceric acid, dioxymaleic acid, dioxyfumaric acid, tartaric acid, dimethylolpropionic acid, dimethylolbutanoic acid, 2,2-dimethylolvaleric acid, 2,2-dimethylolpentanoic acid, 4,4-di(hydroxyphenyl)valeric acid or 4,4-di(hydroxyphenyl)butyric acid, and aromatic carboxylic acids such as 2,6-dioxybenzoic acid.

A volatile base is typically preferably used when dispersing the anionic polyurethane resin in water. There are no particular limitations on the volatile base and a known volatile base can be used. Specific examples thereof include ammonia, methylamine, ethylamine, dimethylamine, diethylamine, triethylamine, morpholine and ethanolamine. Among these, triethylamine enables favorable liquid stability of the water-dispersible polyurethane resin and has a comparatively low boiling point, thereby making it preferable from the viewpoint of only a small amount thereof remaining in the primer layer.

A commercially available anionic water-dispersible polyurethane resin can be preferably used to form the primer layer. Examples of such commercially available anionic water-dispersible polyurethane resins include Hydran ADS-110, Hydran ADS-120, Hydran KU-400SF, Hydran HW-311, Hydran HW-312B, Hydran HW-333, Hydran AP-20, Hydran APX-101HD and Hydran AP-60LM manufactured by DIC Corp., Superflex 107M, Superflex 150, Superflex 150HS, Superflex 410, Superflex 420NS, Superflex 460, Superflex 460S, Superflex 700, Superflex 750 and Superflex 840 manufactured by DKS Co., Ltd., Takelac W-6010, Takelac W-6020, Takelac W-511, Takelac WS-6021 and Takelac WS-5000 manufactured by Mitsui Chemicals Polyurethanes, Inc., and NeoRez R9679, NeoRez R9637, NeoRez R966 and NeoRez R972 manufactured by DSM N.V.

In the polyamide-based film of the present invention, a melamine resin is preferably contained in the primer layer in order to improve water resistance, heat resistance and the like of the primer layer. The content of melamine resin is preferably 1 part by mass to 10 parts by mass based on 100 parts by mass of the anionic water-dispersible polyurethane resin.

A typical example of a melamine resin is a tri(alkoxymethyl)melamine. Examples of the alkoxy group thereof include a methoxy group, ethoxy group, propoxy group and butoxy group. Various types of melamine resins can be respectively used alone or two or more types can be used simultaneously.

Although the solid content concentration of the anionic water-dispersible polyurethane resin in the aqueous coating agent can be suitably altered according to the specifications of the coating device, drying/heating device or the like, an excessively dilute solution is susceptible to the occurrence of the problem of requiring a long period of time in the drying step. On the other hand, if the solid content concentration is excessively high, it becomes difficult to obtain a uniform coating agent, thereby resulting in increased susceptibility to the occurrence of problems with coating properties. From this viewpoint, the solid content concentration of the anionic water-dispersible polyurethane resin in the aqueous coating agent is preferably within the range of 3% by mass to 30% by mass.

An additive such as an antifoaming agent or surfactant may also be added to the aqueous coating agent in addition to the main component thereof in the form of the anionic water-dispersible polyurethane resin in order to improve coating properties when coating the aqueous coating agent onto the film.

Wetting of the aqueous coating agent onto the base film can be promoted by adding a surfactant in particular. There are no particular limitations on the surfactant and examples thereof include anionic surfactants such as polyethylene alkyl phenyl ethers, polyoxyethylene fatty acid esters, glycerin fatty acid esters, fatty acid metal soaps, alkyl sulfates, alkyl sulfonates or alkyl sulfosuccinates, and nonionic surfactants such as acetylene glycol. The surfactant is preferably contained at 0.01% by mass to 1% by mass in the aqueous coating agent. In addition, it is also preferable that the surfactant evaporate during heat treatment in the polyamide-based film production process.

Moreover, various types of additives such as an antistatic agent or slipping agent can be added to the aqueous coating agent as necessary so as to not adversely affect adhesiveness.

2. Production Method of Film of Present Invention

The production method of the present invention is a method for producing a biaxially stretched polyamide-based film, including:

  (1) a sheet molding step for obtaining an unstretched sheet by molding a molten mixture containing a polyamide resin into the form of a sheet, and
  (2) a stretching step for obtaining a stretched film by biaxially stretching the unstretched sheet either successively or simultaneously in the MD and TD; wherein
  (3) the following formulas a) and b) are both satisfied:

  (a) $0.85 \leq X/Y \leq 0.95$

  (b) $8.5 \leq X \times Y \leq 9.5$

  (wherein, X represents a draw ratio in the MD and Y represents a draw ratio in the TD), and
  (4) the stretching step includes stretching in the MD with rollers and stretching in the TD with a tenter,
  wherein the stretching step involves successive biaxial stretching comprising:

  (2-1) a first stretching step of obtaining a first stretched film by stretching the unstretched sheet in the MD at a temperature of 50°C to 120°C; and
  (2-2) a second stretching step of obtaining a second stretched film by stretching the first stretched film in the TD at a temperature of 70°C to 150°C, and
  wherein the second stretched film is further subjected to relaxation heat treatment at a temperature of 180°C to 230°C.

Sheet Molding Step

In the sheet molding step, an unstretched sheet is obtained by molding a molten mixture containing polyamide resin into the form of a sheet.

Various types of materials can be used for the polyamide resin as previously described. In addition, various types of additives can be contained in the molten mixture.

Preparation of the molten mixture per se may be carried out in accordance with a known method. For example, a sheet-like molded body in the form of an unstretched sheet can be obtained by charging a raw material containing polyamide resin into an extruding machine equipped with a heating device, melting the raw material by heating to a prescribed temperature followed by extruding the molten mixture from a T die, and cooling and solidifying the mixture with a casting drum and the like.

Although there are no particular limitations thereon, the average thickness of the unstretched sheet in this case is typically about 15 μm to 250 μm and particularly preferably 50 μm to 235 μm. The stretching step can be carried out more efficiently by setting average thickness to be within these ranges.

Stretching Step

In the stretching step, a stretched film is obtained by biaxially stretching the above-mentioned unstretched sheet in the MD and TD.

As was previously described, the stretched film is obtained by successive biaxial stretching including a step for stretching with a tenter in at least one of the MD and TD. By this process, more uniform film thickness can be obtained.

The tenter per se is a device that has conventionally been used to stretch films, and operates by clamping both ends of an unstretched sheet and widening in the longitudinal direction and/or transverse direction. There are two types of stretching methods, namely, simultaneous biaxial stretching and successive biaxial stretching also in the case of using a tenter. Simultaneous biaxial stretching using a tenter is a method for simultaneously carrying out biaxial stretching in the MD and TD by stretching in the TD simultaneous to stretching in the MD while clamping both ends of an unstretched film. On the other hand, successive biaxial stretching using a tenter includes 1) a method for stretching an unstretched sheet in the MD by passing over a plurality of rollers having different rotating speeds followed by stretching the stretched film in the TD with a tenter, or 2) a method for stretching an unstretched sheet in the MD with a tenter followed by stretching the stretched film in the TD with a tenter. The method of 1) above is particularly preferable from the viewpoints of the properties of the resulting film, productivity and the like. In the case of the method of 1) above, an unstretched film is successively biaxially stretched by a process like that shown in Fig. 2.

First, as shown in Fig. 2, an unstretched sheet 13 is stretched in the MD (longitudinal direction) by passing over a plurality of rollers 21. Since this plurality of rollers has different rotating speeds, the unstretched sheet 13 is stretched in the MD due to the difference in their speeds. Namely, the unstretched sheet is stretched by passing from a low speed roller group to a high speed roller group.

Furthermore, although five rollers are shown in Fig. 2, the actual number of rollers may be different therefrom. In addition, rollers having mutually different functions in the manner of preheating rollers, stretching rollers and cooling rollers can also be installed in that order. The number of these rollers having various functions can be set as is suitable. In addition, in the case of providing a plurality of stretching rollers, they may be set to enable stretching in multiple stages. For example, the draw ratio in the MD can be suitably set to be within the range of (E1 × E2) by two-stage drawing molding using draw ratio E1 for the first stage and draw ratio E2 for the second stage. A first stretched film 13' is obtained in this manner.

Next, the first stretched film 13' that has passed over the rollers 21 is stretched in the TD by introducing into a tenter 22. More specifically, as shown in Fig. 3, the first stretched film 13' that has been introduced into the tenter 22 is clamped near the entrance of the tenter 22 at both ends by clips connected to linkages 34 mounted on guide rails, after which it passes through a preheating zone 31, a stretching zone 32 and a relaxation heat treatment zone 33 in that order moving in the direction of flow. After having been heated to a specific temperature in the preheating zone 31, the first stretched film 13' is stretched in the TD in the stretching zone 32. Subsequently, relaxation treatment is carried out at a specific temperature in the relaxation heat treatment zone 33. A second stretched film 14 (film of the present invention) can be obtained in this manner. Subsequently, the linkages 34 mounted on guide rails are disengaged from the second stretched film 14 near the exit of the tenter 22 and returned to the vicinity of the entrance of the tenter 22.

In this manner, successive biaxial stretching using a tenter is advantageous in terms of productivity, equipment and the like since the film is stretched in the MD by rollers, and is advantageous in terms of controlling film thickness and the like since the film is stretched in the TD with a tenter.

In the production method of the present invention, it is essential that both of the following formulas a) and b) are satisfied:

a) $0.85 \leq X/Y \leq 0.95$ (and preferably, $0.89 \leq X/Y \leq 0.93$)

b) $8.5 \leq X \times Y \leq 9.5$ (and preferably, $8.7 \leq X \times Y \leq 9.1$) (wherein, X represents a draw ratio in the MD and Y represents a draw ratio in the TD).

In the case either of the above-mentioned conditions of a) or b) is not satisfied, stress balance of the resulting polyamide-based film in four directions becomes poor, thereby making it difficult to obtain the film of the present invention.

Temperature conditions in the stretching step are preferably such that the temperature during the above-mentioned simultaneous biaxial stretching is within the range of, for example, 180°C to 220°C. In addition, stretching in the MD is carried out within a temperature range of 50°C to 120°C (and particularly 50°C to 80°C, more particularly 50°C to 70°C and even more particularly 50°C to 65°C) when carrying out the above-mentioned successive biaxial stretching, while stretching in the TD is carried out within a temperature range of 70°C to 150°C (and particularly 70°C to 130°C, more particularly 70°C to 120°C and even more particularly 70°C to 110°C). The film of the present invention can be produced more reliably by controlling temperature so as to be within these ranges. These temperatures can be set and controlled while preheating with, for example, the rollers 21 (preheating rollers) shown in Fig. 2 or the preheating zone 31 of the tenter shown in Fig. 3.

Relaxation heat treatment is carried out after stretching for both simultaneous biaxial stretching and successive biaxial stretching using a tenter. Relaxation heat treatment is carried out within a temperature range of 180°C to 230°C preferably at a relaxation rate of 2% to 5%. These temperatures can be set and controlled in the relaxation treatment zone of the tenter shown in Fig. 3.

Although examples of means for realizing the temperature range during stretching as described above include:

1) blowing hot air onto the film surface, 2) using a far infrared or near infrared heater, and 3) a combination of the two, etc. and the heating method of the present invention preferably includes a method involving blowing hot air.

<Embodiment of Stretching Step>

A successive biaxial stretching step including stretching in the MD with rollers and stretching in the TD with a tenter is employed for the stretching step in the present invention. As a result of employing this method and satisfying the temperature conditions indicated below, since it becomes possible to demonstrate superior thickness uniformity as well as more superior stress balance during elongation in the above-mentioned four directions, the film of the present invention having a thickness of 15 $\mu$m or less in particular can be more reliably and efficiently obtained.

Stretching in MD

First, stretching in the MD is preferably carried out using rollers within a temperature range of 50°C to 70°C and more preferably 50°C to 65°C.
Stretching in the MD is preferably carried out by multistage (two stages or more) stretching. In this case, the draw ratio is preferably increased in stages. Namely, stretching is preferably controlled so that the draw ratio of the (n+1)th stage is higher than the draw ratio of the (n)th stage. As a result, the overall film can be stretched even more uniformly. For example, in the case of two-stage stretching, the draw ratio in the longitudinal direction can be suitably set within the range of 2.53 times to 3.12 times by making the draw ratio of the first stage to be 1.1 times to 1.2 times and making the draw ratio of the second stage to be 2.3 times to 2.6 times.
Moreover, a temperature gradient is preferably applied to stretching in the MD. In particular, the temperature is preferably made to sequentially rise along the receiving direction of the film, and the temperature gradient throughout the entire stretching section (temperature difference between a temperature T1 at the start of the film in the traveling direction (entrance) and a temperature T2 at the end (exit)) is normally preferably 2°C or more and more preferably 3°C or more. At this time, the transit time (heating time) of the film from the start (entrance) to the end (exit) of the film in the traveling direction is normally preferably 1 second to 5 seconds and more preferably 2 seconds to 4 seconds.

Stretching in TD

Stretching in the TD is carried out with a tenter having the zones shown in Fig. 3 is formed. At this time, the temperature of the preheating zone is preferably 60°C to 70°C. The temperature of the stretching zone is preferably made to be within the range of 70°C to 130°C, more preferably within the range of 75°C to 120°C, and most preferably within the range of 80°C to 110°C.
In addition, the temperature is preferably made to sequentially rise along the receiving direction of the film in the stretching zone, and throughout the entire stretching zone, the temperature gradient thereof (temperature difference between a temperature T1 at the start of the film in the traveling direction (entrance) and a temperature T2 at the end (exit)) is normally preferably 5°C or more and more preferably 8°C or more. At this time, the transit time (heating time) of the film from the start (entrance) to the end (exit) of the film in the traveling direction in the stretching zone is normally preferably 1 second to 5 seconds and more preferably 2 seconds to 4 seconds.
Relaxation heat treatment is desirably carried out in the relaxation heat treatment zone. The heat treatment temperature thereof is within the range of 180°C to 230°C, more preferably within the range of 180°C to 220°C and most preferably within the range of 180°C to 210°C. In addition, the relaxation rate is normally preferably about 2% to 5%.
In addition, when obtaining the polyamide-based film of the present invention having a primer layer on at least one side of the film surface as well, stretching is preferably carried out using the same stretching method and same stretching conditions as previously described. In the production method described above, an aqueous coating agent is preferably coated onto the polyamide-based film after being stretched in the MD in order to form the primer layer on the film surface. The film is subsequently preferably stretched in the TD under the same conditions as previously described together with the aqueous coating agent (inline coating). The coated amount of the aqueous coating agent is preferably adjusted so that the thickness of the primer layer formed on the film surface after stretching is 0.01 $\mu$m to 0.10 $\mu$m.
Furthermore, a stretching method other than that described above is preferably excluded for the stretching step in the production method of the present invention from the viewpoint of ensuring thickness uniformity and the like. For example, it is preferred that a stretching step using the tubular method (inflation method) is not included in the production method of the present invention.

Examples

The following provides a more detailed explanation of characteristics of the present invention by indicating examples and comparative examples thereof. However, the scope of the present invention is not limited to these examples.

Example 1

(1) Production of Polyamide-Based Film

An unstretched sheet was produced by using a Polyamide 6 resin (Unitika Ltd., A1030BRF, relative viscosity: 3.1, monomer content: 1.0% or less) and a Silica-containing Nylon 6 resin that contains 6% by mass of silica (Unitika Ltd., A1030QW, relative viscosity: 2.7, monomer content: 1.0% or less) as raw materials, melting and kneading in an extruding machine at a component ratio of A1030BRF/silica-containing Nylon resin of 98.7/1.3 (mass ratio), supplying the molten mixture to a T-die, discharging in the form of a sheet, and winding around a metal drum adjusted to a temperature of 20°C followed by cooling and taking up into a roll. At this time, the feed rate of the polyamide resin was adjusted so that the thickness of the polyamide-based film obtained after stretching was 12 $\mu$m.

Next, the resulting unstretched sheet was subjected to a stretching step by successive biaxial stretching. More specifically, stretching was carried out by a method involving stretching in the MD using rollers followed by stretching in the TD using a tenter.

First, the unstretched sheet was stretched in the MD by passing the above-mentioned sheet over a plurality of rollers so that a total draw ratio in the MD was 2.85 times. At this time, stretching was carried out by two-stage stretching, the draw ratio in the first stage was 1.1 times, the draw ratio in the second stage was 2.59 times, and the total draw ratio (MD1 $\times$ MD2) was 1.1 $\times$ 2.59 = 2.85 times. As to heating conditions, a temperature gradient along the receiving direction of the film was set so that the temperature (T1) at the start in the traveling direction was 54°C and the temperature (T2) at the end was 57°C in the MD stretching. In this case, transit time (heating time) of the film from the start (entrance) to the end (exit) of the film in the traveling direction was about 3 seconds.

After that, stretching in the TD was carried out using a tenter as shown in Fig. 3. First, the film was stretched at a draw ratio of 3.2 times in the TD in the stretching zone while preheating to a temperature of 65°C in the preheating zone (preheating section). At this time, a temperature gradient along the receiving direction of the film was created in the stretching zone (stretching section) so that the temperature (T1) at the start of the film in the traveling direction was 74°C and the temperature (T2) at the end was 96°C. Transit time (heating time) of the film from the start (entrance) to the end (exit) of the film in the traveling direction was about 3 seconds.

After having passed through the stretching zone, the film was subjected to relaxation heat treatment in the relaxation heat treatment zone (heat treatment section) under conditions of a temperature of 202°C and relaxation rate of 3%. A biaxially stretched polyamide-based film (wound length: 2000 m) was obtained by continuously producing 1000 m or more in this manner. The resulting film was taken up into the form of a roll.

(2) Laminate Fabrication

After coating a two-component polyurethane-based adhesive (Toyo-Morton, Ltd., TM-K55/CAT-10L) onto the biaxially stretched polyamide-based film obtained in (1) above to a coated amount of 5 g/m$^2$, the coated film was dried for 10 seconds at 80°C. Metal foil (aluminum foil having a thickness of 50 $\mu$m) was laminated onto the adhesive-coated surface thereof. After coating the above-mentioned adhesive onto the aluminum foil side of the laminate formed of the polyamide-based film and metal foil under the same conditions, a sealant film (unstretched polypropylene film (Mitsui Chemicals Tohcello, Inc., GHC, thickness: 50 $\mu$m) was laminated on the coated side thereof followed by subjecting to aging treatment for 72 hours in an atmosphere at 40°C to fabricate a laminate (the polyamide-based film/aluminum foil/sealant film).

Examples 2-28 and Comparative Examples 1-16

Polyamide-based films were obtained using the same method as Example 1 with the exception of changing the production conditions and target thickness of the stretched polyamide-based film to those shown in Tables 1 to 3. Laminates were then fabricated in the same manner as Example 1 using the resulting polyamide-based films. However, the changes made in Examples 7 and 17 are described in detail below.

(1) Example 7

After coating a two-pack type polyurethane-based adhesive (Toyo-Morton, Ltd., TM-K55/CAT-10L) onto the side of the polyamide-based film on which the aluminum foil was not laminated in the laminate obtained in Example 1 to a coated amount of 5 g/m$^2$, the coated film was dried for 10 seconds at 80°C. A PET film (Unitika Ltd., Emblet PET-

12, thickness: 12 μm) was laminated onto the adhesive-coated surface thereof to fabricate a laminate (the PET film, /polyamide-based film/ aluminum foil/sealant film).

(2) Example 17

A polyamide-based film was obtained using the same method as Example 1 with the exception of using a composition containing Polyamide 6 resin (Unitika Ltd., A1030BRF), Polyamide 66 resin (Unitika Ltd., A226) and Silica-containing Nylon 6 resin that contains 6% by mass of silica at a component ratio of A1030BRF/A226/Silica-containing nylon resin of 89.0/9.7/1.3 (mass ratio) as raw material in the production of the polyamide-based film indicated in Example 1. A laminate was fabricated in the same manner as Example 1 using the resulting polyamide-based film.

[Table 1]

| | MD | | | | | TD | | | | | | MD/TD | MD×TD | Target Thickness |
| | Heat Treatment Temperature | | Draw Ratio | | | Preheating Section | Stretching Section | | | Heat Treatment Section | | | | |
| | T1 | T2 | 1st stage MD1 | 2nd stage MD2 | Total Draw Ratio MD1×MD2 | Heat Treatment Temp. | Heat Treatment Temp. | | Draw Ratio TD | Heat Treatment Temp. | Relaxation Rate | | | |
| | | | | | | | T1 | T2 | | | | | | |
| Ex. 1 | 54 | 57 | 1.1 | 2.59 | 2.85 | 65 | 74 | 96 | 3.20 | 202 | 3 | 0.89 | 9.1 | 12 |
| Ex. 2 | 54 | 57 | 1.1 | 2.59 | 2.85 | 65 | 74 | 96 | 3.30 | 202 | 3 | 0.86 | 9.4 | 12 |
| Ex. 3 | 54 | 57 | 1.1 | 2.59 | 2.85 | 65 | 74 | 96 | 3.05 | 202 | 3 | 0.93 | 8.7 | 12 |
| Ex. 4 | 54 | 57 | 1.1 | 2.68 | 2.95 | 65 | 74 | 96 | 3.20 | 202 | 3 | 0.92 | 9.4 | 12 |
| Ex. 5 | 54 | 57 | 1.1 | 2.48 | 2.73 | 65 | 74 | 96 | 3.20 | 202 | 3 | 0.85 | 8.7 | 12 |
| Ex. 6 | 54 | 57 | 1.1 | 2.59 | 2.85 | 65 | 74 | 96 | 3.20 | 213 | 3 | 0.89 | 9.1 | 12 |
| Ex. 7 | Used polyamide-based film of Example 1 | | | | | | | | | | | | | |
| Ex. 8 | 58 | 61 | 1.1 | 2.59 | 2.85 | 70 | 78 | 100 | 3.20 | 202 | 4 | 0.89 | 9.1 | 15 |
| Ex. 9 | 52 | 55 | 1.2 | 2.38 | 2.85 | 64 | 72 | 95 | 3.20 | 202 | 3 | 0.89 | 9.1 | 10 |
| Ex. 10 | 52 | 55 | 1.2 | 2.38 | 2.85 | 64 | 72 | 95 | 3.30 | 202 | 3 | 0.86 | 9.4 | 10 |
| Ex. 11 | 52 | 55 | 1.2 | 2.38 | 2.85 | 64 | 72 | 95 | 3.05 | 202 | 3 | 0.93 | 8.7 | 10 |
| Ex. 12 | 52 | 55 | 1.2 | 2.46 | 2.95 | 64 | 72 | 95 | 3.20 | 202 | 3 | 0.92 | 9.4 | 10 |

| | MD | | | | | TD | | | | | | MD/TD | MD×TD | Target Thickness |
| | Heat Treatment Temperature | | Draw Ratio | | | Preheating Section | Stretching Section | | | Heat Treatment Section | | | | |
| | T1 | T2 | 1st stage MD1 | 2nd stage MD2 | Total Draw Ratio MD1×MD2 | Heat Treatment Temp. | Heat Treatment Temp. | | Draw Ratio TD | Heat Treatment Temp. | Relaxation Rate | | | |
| | | | | | | | T1 | T2 | | | | | | |
|---|---|---|---|---|---|---|---|---|---|---|---|---|---|---|
| Ex. 13 | 52 | 55 | 1.2 | 2.28 | 2.74 | 64 | 72 | 95 | 3.20 | 202 | 3 | 0.85 | 8.7 | 10 |
| Ex. 14 | 52 | 55 | 1.2 | 2.38 | 2.86 | 64 | 72 | 95 | 3.20 | 213 | 3 | 0.89 | 9.1 | 10 |

[Table 2]

| | MD | | | | | TD | | | | | | MD/TD | MDxTD | Target Thickness |
| | Heat Treatment Temperature | | Draw Ratio | | | Preheating Section | Stretching Section | | | Heat Treatment Section | | | | |
| | T1 | T2 | 1st stage MD1 | 2nd stage MD2 | Total Draw Ratio MD1×MD2 | Heat Treatment Temp. | Heat Treatment Temp. | | Draw Ratio TD | Heat Treatment Temp. | Relaxation Rate | | | |
| | | | | | | | T1 | T2 | | | | | | |
|---|---|---|---|---|---|---|---|---|---|---|---|---|---|---|
| Ex. 15 | 60 | 64 | 1.2 | 2.38 | 2.85 | 78 | 84 | 104 | 3.20 | 202 | 4 | 0.89 | 9.1 | 25 |
| Ex. 16 | 50 | 54 | 1.1 | 2.59 | 2.85 | 63 | 70 | 94 | 3.20 | 202 | 5 | 0.89 | 9.1 | 8 |
| Ex. 17 | 60 | 64 | 1.1 | 2.59 | 2.85 | 70 | 90 | 110 | 3.20 | 202 | 5 | 0.89 | 9.1 | 12 |
| Ex. 18 | 59 | 63 | 1.05 | 2.71 | 2.85 | 70 | 78 | 100 | 3 | 202 | 4 | 1 | 9 | 15 |
| Ex. 19 | 58 | 61 | 1.1 | 2.59 | 2.85 | 69 | 76 | 102 | 3.20 | 202 | 3 | 0.89 | 9.1 | 15 |
| Ex. 20 | 55 | 58 | 1.05 | 2.71 | 2.85 | 65 | 74 | 96 | 3 | 202 | 3 | 1 | 9 | 12 |
| Ex. 21 | 54 | 57 | 1.1 | 2.59 | 2.85 | 65 | 73 | 98 | 3.20 | 202 | 3 | 0.89 | 9.1 | 12 |
| Ex. 22 | 55 | 58 | 1.05 | 2.81 | 2.95 | 65 | 74 | 96 | 3 | 202 | 3 | 1 | 9 | 12 |
| Ex. 23 | 54 | 57 | 1.1 | 2.68 | 2.95 | 66 | 75 | 95 | 3.20 | 202 | 3 | 0.92 | 9.4 | 12 |
| Ex. 24 | 70 | 74 | 1.2 | 2.38 | 2.85 | 78 | 84 | 104 | 3.20 | 202 | 4 | 0.89 | 9.1 | 25 |
| Ex. 25 | 60 | 64 | 1.2 | 2.38 | 2.85 | 78 | 90 | 115 | 3.20 | 202 | 4 | 0.89 | 9.1 | 25 |
| Ex. 26 | 54 | 57 | 1.1 | 2.59 | 2.85 | 70 | 90 | 121 | 3.20 | 202 | 3 | 0.89 | 9.1 | 12 |

EP 3 235 859 B1

(continued)

| | MD | | | | | TD | | | | | | MD/TD | MDxTD | Target Thickness |
|---|---|---|---|---|---|---|---|---|---|---|---|---|---|---|
| | Heat Treatment Temperature | | Draw Ratio | | | Preheating Section | Stretching Section | | | Heat Treatment Section | | | | |
| | T1 | T2 | 1st stage MD1 | 2nd stage MD2 | Total Draw Ratio MD1×MD2 | Heat Treatment Temp. | Heat Treatment Temp. | | Draw Ratio TD | Heat Treatment Temp. | Relaxation Rate | | | |
| | | | | | | | T1 | T2 | | | | | | |
| Ex. 27 | 68 | 70 | 1.1 | 2.59 | 2.85 | 65 | 74 | 96 | 3.20 | 202 | 3 | 0.89 | 9.1 | 12 |
| Ex. 28 | 68 | 70 | 1.1 | 2.59 | 2.85 | 70 | 90 | 121 | 3.20 | 202 | 3 | 0.89 | 9.1 | 12 |

[Table 3]

| | MD | | | | | TD | | | | | | MD/TD | MD×TD | Target Thickness |
| | Heat Treatment Temperature | | Draw Ratio | | | Preheating Section | Stretching Section | | | Heat Treatment Section | | | | |
| | T1 | T2 | 1st stage MD1 | 2nd stage MD2 | Total Draw Ratio MD1×MD2 | Heat Treatment Temp. | Heat Treatment Temp. | | Draw Ratio TD | Heat Treatment Temp. | Relaxation Rate | | | |
| | | | | | | | T1 | T2 | | | | | | |
|---|---|---|---|---|---|---|---|---|---|---|---|---|---|---|
| Comp.Ex.1 | 54 | 57 | 1.1 | 2.33 | 2.56 | 65 | 74 | 96 | 3.20 | 202 | 3 | 0.8 | 8.2 | 12 |
| Comp.Ex.2 | 54 | 57 | 1.1 | 2.55 | 2.80 | 65 | 74 | 96 | 3.60 | 202 | 3 | 0.78 | 10.1 | 12 |
| Comp.Ex.3 | 54 | 57 | 1.1 | 2.55 | 2.80 | 65 | 74 | 96 | 2.80 | 202 | 3 | 1.00 | 7.8 | 12 |
| Comp.Ex.4 | 54 | 57 | 1.1 | 2.91 | 3.20 | 65 | 74 | 96 | 3.20 | 202 | 3 | 1.00 | 10.2 | 12 |
| Comp.Ex.6 | 54 | 57 | 1.1 | 2.50 | 2.75 | 65 | 74 | 96 | 3.30 | 202 | 3 | 0.83 | 9.1 | 12 |
| Comp.Ex.6 | 54 | 57 | 1.1 | 2.73 | 3.00 | 65 | 74 | 96 | 3.10 | 202 | 3 | 0.97 | 9.3 | 12 |
| Comp.Ex.7 | 54 | 57 | 1.1 | 2.45 | 2.70 | 65 | 74 | 96 | 3.10 | 202 | 3 | 0.87 | 8.4 | 12 |
| Comp.Ex.8 | 54 | 57 | 1.1 | 2.68 | 2.95 | 65 | 74 | 96 | 3.40 | 202 | 3 | 0.87 | 10.0 | 12 |
| Comp.Ex.9 | 54 | 57 | 1.1 | 2.73 | 3.00 | 65 | 74 | 96 | 2.80 | 202 | 3 | 1.07 | 8.4 | 12 |
| Comp.Ex. 10 | 85 | 70 | 2.1 | 1.60 | 3.36 | 130 | 130 | 130 | 4.00 | 210 | 5 | 0.84 | 13.4 | 15 |
| Comp.Ex. 11 | 72 | 75 | 1.1 | 2.59 | 2.85 | 65 | 74 | 96 | 3.20 | 202 | 3 | 0.89 | 9.1 | 12 |
| Comp.Ex. 12 | 52 | 56 | 1.1 | 2.59 | 2.85 | 55 | 58 | 82 | 3.30 | 202 | 3 | 0.86 | 9.4 | 12 |
| Comp.Ex. 13 | 72 | 75 | 1.1 | 2.41 | 2.65 | 65 | 74 | 96 | 3.15 | 202 | 3 | 0.84 | 8.4 | 12 |
| Comp.Ex. 14 | 54 | 57 | 1.1 | 2.59 | 2.85 | 55 | 58 | 82 | 3.40 | 202 | 3 | 0.84 | 9.7 | 12 |
| Comp.Ex. 15 | 46 | 49 | 1.1 | 2.59 | 2.85 | 65 | 74 | 96 | 3.40 | 202 | 3 | 0.84 | 9.7 | 12 |
| Comp.Ex. 16 | 54 | 57 | 1.1 | 2.41 | 2.65 | 82 | 74 | 96 | 3.15 | 202 | 3 | 0.84 | 8.4 | 12 |

In Tables 1 to 3, each draw ratio indicates the draw ratio based on a value of 1. In addition, each heat treatment temperature is in units of "°C", relaxation rate is in units of "%", and target thicknesses are indicated in "μm".

Test Example 1

Properties were evaluated for the polyamide-based films and laminates obtained in Examples 1 to 28 and Comparative Examples 1 to 16. The evaluation results are shown in Tables 4 to 9. Furthermore, the methods used to measure and evaluate each property are indicated below.

(1) Stress of Polyamide-Based Film in Four Directions at 5% Elongation and 15% Elongation

The stress of the polyamide-based films in four directions at 5% elongation and 15% elongation was measured and calculated according to the previously explained method after having designated MD for the reference direction (0 degree direction).

The sample films used for measurement were sampled at a location in or near the center of the wound width and corresponding to half the wound amount in the resulting polyamide-based film wound into a roll.

(2) Average Thickness and Standard Deviation of Polyamide-Based Film

The average thickness and standard deviation of the polyamide-based films were respectively measured and calculated according to the previously described methods. Furthermore, the following three types of samples were used for the sample films used for measurement.

In the resulting polyamide-based films wound into a roll, a) sample film sampled at a location near the center of the wound width and corresponding to half the wound amount was designated as "A", b) sample film sampled at a location near the right end of the wound width and corresponding to half the wound amount was designated as "B", and c) sample film near the left end of the wound width and corresponding to close to the end of winding was designated as "C".

(3) Boiling Water Shrinkage, Modulus of Elasticity and Relative Viscosity of Polyamide-Based Film

The boiling water shrinkage, modulus of elasticity and relative viscosity of the polyamide-based films were measured according to the previously indicated methods. Furthermore, the sample films used for measurement were sampled at a location in or near the center of the wound width and corresponding to half the wound amount in the resulting polyamide-based films wound into a roll.

(4) Thickness of Primer Layer (Anchor Coat (AC) Layer)

The resulting polyamide-based films were embedded in epoxy resin followed by sampling sections cut to a thickness of 100 nm with a freezing ultra-microtome. The sections were cut at a temperature of -120°C at a cutting speed of 0.4 mm/min. The sampled sections were subjected to gas-phase dyeing for 1 hour with $RuO_4$ solution followed by measurement of primer layer thickness at an accelerating voltage of 100 kV by transmission measurement using a transmission electron microscope (TEM, JEOL Ltd., JEM-1230). At this time, five arbitrary locations were selected for measurement of primer layer thickness and the average of the measured values at those five locations was taken to be the thickness of the primer layer.

Furthermore, the sample films used for measurement were sampled at a location near the center of the wound width and corresponding to half the wound amount in the resulting polyamide-based films wound into a roll.

(5) Laminate Moldability and Wet heat Resistance

1) Draw Depth (Erichsen Test)

A steel ball punch was pressed into the resulting laminates to a prescribed depth followed by determination of Erichsen values using an Erichsen tester (Yasuda Seiki Seisakusho Ltd., No. 5755) based on JIS Z 2247. Erichsen values were measured at 0.5 mm intervals. When the laminate has an Erichsen value of 5 mm or more, the laminate was judged to be preferable. In particular, the laminate was judged to be more preferable for deep drawing molding in the case of an Erichsen value of 8 mm or more.

2) Wet heat Resistance

The resulting laminates were subjected to an Erichsen test in the same manner as 1) above using a high-temperature, highpressure cooking and sterilizing device (Hisaka Works Ltd., RCS-60SPXTG) after treating for 30 minutes at 120°C and 1.8 kg/cm$^2$ in order to evaluate molding stability under high temperature and high humidity conditions. At this time, a steel ball punch was pressed into the laminates of the examples to a location at which the Erichsen value became 8 mm, or was pressed into the laminates of the comparative examples to a location at which the Erichsen value became 5 mm. In this case, the laminates were visually examined for the occurrence of delamination and the occurrence of breakage of the polyamide-based film or metal foil that composes the laminates.

Those laminates in which there was no occurrence whatsoever of delamination or breakage of the polyamide-based film or metal foil were indicated with an "○", those laminates in which there was partial occurrence of delamination but no occurrence of breakage of the polyamide-based film or metal-foil were indicated with a "Δ", and those laminates in which delamination or breakage of the polyamide-based film or metal foil occurred were indicated with an "X".

[Table 4]

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Ex. 1 | 11.9 | 0.128 | 11.9 | 0.130 | 12.0 | 0.132 | -- |
| Ex. 2 | 12.1 | 0.130 | 12.0 | 0.133 | 12.0 | 0.127 | -- |
| Ex. 3 | 12.0 | 0.124 | 12.1 | 0.125 | 11.9 | 0.126 | -- |
| Ex. 4 | 12.1 | 0.130 | 12.0 | 0.132 | 12.0 | 0.130 | -- |
| Ex. 5 | 11.8 | 0.126 | 11.9 | 0.125 | 12.1 | 0.128 | -- |
| Ex. 6 | 11.9 | 0.132 | 11.8 | 0.132 | 12.0 | 0.130 | -- |
| Ex. 7 | Used polyamide-based film of Example 1 | | | | | | |
| Ex. 8 | 14.9 | 0.148 | 15.0 | 0.146 | 14.8 | 0.150 | -- |
| Ex. 9 | 9.8 | 0.120 | 9.9 | 0.122 | 10.1 | 0.120 | -- |
| Ex. 10 | 10.0 | 0.118 | 10.0 | 0.119 | 9.9 | 0.120 | -- |
| Ex. 11 | 9.9 | 0.122 | 10.0 | 0.120 | 10.0 | 0.124 | -- |
| Ex. 12 | 10.1 | 0.116 | 9.9 | 0.118 | 10.0 | 0.114 | -- |
| Ex. 13 | 10.0 | 0.118 | 10.2 | 0.118 | 9.9 | 0.118 | -- |
| Ex. 14 | 9.9 | 0.120 | 10.0 | 0.121 | 10.1 | 0.119 | -- |

[Table 5]

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Ex. 15 | 24.8 | 0.158 | 25.0 | 0.156 | 24.8 | 0.157 | -- |
| Ex. 16 | 8.2 | 0.120 | 8.1 | 0.118 | 8.1 | 0.119 | -- |
| Ex. 17 | 11.9 | 0.169 | 12.0 | 0.172 | 12.0 | 0.179 | -- |
| Ex. 18 | 15.0 | 0.140 | 15.1 | 0.136 | 15.1 | 0.138 | -- |
| Ex. 19 | 14.8 | 0.136 | 14.9 | 0.138 | 14.9 | 0.137 | -- |
| Ex. 20 | 11.9 | 0.120 | 11.8 | 0.118 | 12.0 | 0.119 | -- |
| Ex. 21 | 12.0 | 0.118 | 12.1 | 0.120 | 12.1 | 0.119 | -- |
| Ex. 22 | 12.1 | 0.126 | 12.1 | 0.130 | 12.1 | 0.128 | -- |
| Ex. 23 | 12.0 | 0.130 | 12.0 | 0.125 | 12.0 | 0.126 | -- |
| Ex. 24 | 25.0 | 0.157 | 25.1 | 0.156 | 25.0 | 0.154 | -- |
| Ex. 25 | 24.9 | 0.155 | 25.0 | 0.155 | 24.8 | 0.154 | -- |
| Ex. 26 | 11.8 | 0.162 | 11.9 | 0.163 | 11.8 | 0.163 | -- |
| Ex. 27 | 12.1 | 0.164 | 12.0 | 0.165 | 12.1 | 0.163 | -- |
| Ex. 28 | 12.1 | 0.168 | 12.1 | 0.169 | 12.0 | 0.168 | -- |

[Table 6]

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Comp.Ex. 1 | 12.1 | 0.274 | 11.9 | 0.280 | 11.9 | 0.284 | -- |
| Comp.Ex. 2 | 12.0 | 0.229 | 11.8 | 0.234 | 12.0 | 0.236 | -- |
| Comp.Ex. 3 | 12.1 | 0.333 | 12.0 | 0.330 | 11.8 | 0.328 | -- |
| Comp.Ex. 4 | 11.8 | 0.243 | 11.9 | 0.250 | 11.9 | 0.252 | -- |

(continued)

|  | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Comp.Ex. 5 | 12.0 | 0.249 | 12.0 | 0.252 | 12.0 | 0.259 | -- |
| Comp.Ex. 6 | 11.9 | 0.244 | 11.9 | 0.246 | 12.1 | 0.240 | -- |
| Comp.Ex. 7 | 11.9 | 0.255 | 12.0 | 0.265 | 12.0 | 0.262 | -- |
| Comp.Ex. 8 | 12.0 | 0.239 | 12.2 | 0.231 | 12.1 | 0.245 | -- |
| Comp.Ex. 9 | 12.0 | 0.298 | 12.1 | 0.305 | 12.1 | 0.300 | -- |
| Comp.Ex. 10 | 15.2 | 0.411 | 15.0 | 0.420 | 15.0 | 0.413 | -- |
| Comp.Ex. 11 | 11.9 | 0.445 | 12.0 | 0.450 | 12.0 | 0.456 | -- |
| Comp.Ex. 12 | 12.1 | 0.515 | 12.1 | 0.527 | 12.1 | 0.526 | -- |
| Comp.Ex. 13 | 12.2 | 0.510 | 12.1 | 0.515 | 12.3 | 0.512 | -- |
| Comp.Ex. 14 | 12.0 | 0.406 | 12.0 | 0.411 | 12.1 | 0.408 | -- |
| Comp.Ex. 15 | 11.9 | 0.453 | 11.8 | 0.450 | 12.0 | 0.450 | -- |
| Comp.Ex. 16 | 11.9 | 0.479 | 11.9 | 0.482 | 12.0 | 0.480 | -- |

[Table 7]

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Ex.1 | 53.8 | 53.0 | 55.4 | 69.8 | 16.8 | 95.6 | 91.8 | 94.2 | 112.5 | 20.7 | 2.6 | 3.2 | 2.2 | 2.1 | 2.98 | 10.0 | Δ |
| Ex.2 | 66.4 | 54.8 | 55.9 | 78.4 | 23.6 | 94.0 | 82.5 | 92.8 | 112.3 | 29.8 | 3.6 | 4.2 | 2.3 | 2.2 | 3.00 | 8.4 | Δ |
| Ex.3 | 71.8 | 56.0 | 54.2 | 72.3 | 18.1 | 90.5 | 95.5 | 100.0 | 112.5 | 22.0 | 3.8 | 4.3 | 2.2 | 1.8 | 2.97 | 9.5 | Δ |
| Ex.4 | 70.5 | 51.3 | 53.8 | 72.1 | 20.8 | 94.0 | 86.0 | 92.8 | 113.5 | 27.5 | 3.6 | 4.1 | 2.4 | 2.3 | 2.96 | 8.7 | Δ |
| Ex.5 | 68.4 | 59.0 | 82.9 | 65.7 | 23.9 | 116.5 | 100.8 | 112.8 | 129.2 | 28.4 | 4.2 | 4.8 | 2.1 | 1.8 | 2.98 | 8.3 | Δ |
| Ex.6 | 69.8 | 56.9 | 53.4 | 72.8 | 19.4 | 90.5 | 83.4 | 91.0 | 106.5 | 23.1 | 2.4 | 2.6 | 2.0 | 1.7 | 3.01 | 9.6 | Δ |
| Ex.7 | Used Polyamide-based Film of Example 1 | | | | | | | | | | | | | | 2.98 | 8.5 | Δ |
| Ex.8 | 54.9 | 52.8 | 53.0 | 68.7 | 15.9 | 95.6 | 91.8 | 94.2 | 112.5 | 20.7 | 2.7 | 3.1 | 2.2 | 2.0 | 2.96 | 9.0 | Δ |
| Ex.9 | 63.2 | 54.8 | 52.9 | 69.7 | 16.8 | 89.5 | 82.1 | 90.0 | 101.9 | 19.8 | 2.8 | 3.4 | 2.4 | 2.1 | 2.97 | 9.9 | Δ |
| Ex. 10 | 68.4 | 57.4 | 54.6 | 79.5 | 24.9 | 93.7 | 81.2 | 94.8 | 108.1 | 26.9 | 3.9 | 4.4 | 2.4 | 2.3 | 3.00 | 8.1 | Δ |
| Ex. 11 | 54.6 | 52.6 | 50.0 | 68.3 | 18.3 | 89.6 | 94.5 | 101.7 | 108.1 | 18.5 | 3.9 | 4.6 | 2.1 | 1.8 | 2.96 | 9.8 | Δ |
| Ex. 12 | 67.1 | 52.8 | 54.0 | 73.9 | 21.1 | 97.4 | 83.3 | 91.5 | 109.6 | 26.3 | 3.6 | 4.2 | 2.4 | 2.3 | 2.97 | 8.6 | Δ |
| Ex. 13 | 66.4 | 55.9 | 80.7 | 66.2 | 24.8 | 117.2 | 96.3 | 107.8 | 125.4 | 29.1 | 4.5 | 5.2 | 2.0 | 1.8 | 3.00 | 7.8 | Δ |
| Ex. 14 | 64.0 | 53.5 | 49.4 | 70.2 | 20.8 | 88.4 | 81.8 | 89.2 | 103.1 | 21.3 | 2.1 | 2.7 | 2.0 | 1.8 | 2.99 | 8.9 | Δ |

[Table 8]

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Ex. 15 | 56.4 | 54.8 | 53.2 | 71.0 | 17.8 | 98.8 | 96.9 | 92.0 | 113.2 | 21.2 | 2.8 | 3.4 | 2.3 | 2.1 | 2.98 | 9.8 | △ |
| Ex. 16 | 56.4 | 52.1 | 54.2 | 67.4 | 15.3 | 89.5 | 80.2 | 93.0 | 101.1 | 20.9 | 2.9 | 3.5 | 2.2 | 2.1 | 2.98 | 9.6 | △ |
| Ex. 17 | 56.8 | 51.5 | 58.9 | 75.6 | 24.1 | 92.7 | 80.0 | 94.9 | 109.9 | 29.9 | 2.5 | 3.1 | 2.2 | 2.1 | 2.96 | 7.6 | △ |
| Ex. 18 | 55.4 | 51.3 | 56.7 | 68.4 | 17.1 | 89.6 | 85.2 | 90.1 | 108.4 | 23.2 | 3.7 | 4.2 | 2.1 | 2.2 | 3.00 | 9.4 | △ |
| Ex. 19 | 69.8 | 52.3 | 54.1 | 71.3 | 19.0 | 92.3 | 96.0 | 98.9 | 115.6 | 23.3 | 2.8 | 3.4 | 2.2 | 2.1 | 3.02 | 9.6 | △ |
| Ex. 20 | 55.1 | 54.6 | 53.2 | 68.9 | 15.7 | 93.5 | 82.0 | 94.3 | 104.9 | 22.9 | 3.8 | 4.3 | 2.3 | 2.0 | 2.99 | 9.0 | △ |
| Ex. 21 | 68.7 | 54.1 | 53.9 | 72.3 | 18.4 | 91.2 | 97.0 | 95.0 | 110.9 | 19.7 | 2.5 | 3.1 | 2.3 | 2.1 | 2.98 | 9.4 | △ |
| Ex. 22 | 70.1 | 56.3 | 51.0 | 74.3 | 23.3 | 93.5 | 84.9 | 98.1 | 105.1 | 20.2 | 3.7 | 4.2 | 2.3 | 2.0 | 2.98 | 8.2 | △ |
| Ex. 23 | 71.3 | 54.9 | 52.8 | 70.5 | 18.5 | 94.6 | 86.2 | 98.1 | 110.1 | 23.9 | 3.4 | 4.0 | 2.2 | 2.3 | 3.00 | 9.5 | △ |
| Ex. 24 | 56.9 | 74.0 | 76.2 | 58.6 | 19.3 | 87.2 | 107.9 | 117.8 | 89.4 | 30.6 | 3.0 | 3.6 | 2.5 | 2.2 | 3.01 | 8.4 | △ |
| Ex. 25 | 58.5 | 76.5 | 79.6 | 60.7 | 21.1 | 89.4 | 112.7 | 120.1 | 90.8 | 30.7 | 2.8 | 3.3 | 2.4 | 2.1 | 3.00 | 8.2 | △ |
| Ex. 26 | 52.4 | 59.6 | 60.1 | 77.9 | 25.5 | 89.3 | 91.8 | 94.2 | 119.7 | 30.4 | 2.2 | 2.4 | 1.8 | 1.4 | 2.99 | 6.9 | △ |
| Ex. 27 | 50.0 | 69.5 | 75.8 | 65.9 | 25.8 | 85.1 | 110.7 | 116.2 | 98.7 | 31.1 | 1.9 | 2.6 | 1.4 | 1.8 | 2.98 | 6.8 | △ |

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Ex. 28 | 49.5 | 74.5 | 75.9 | 56.4 | 26.4 | 84.9 | 106.8 | 116.5 | 92.4 | 31.6 | 1.9 | 2.3 | 1.3 | 1.4 | 2.99 | 6.5 | Δ |

[Table 9]

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Comp.Ex.1 | 56.9 | 49.6 | 55.5 | 87.8 | 38.2 | 98.8 | 89.4 | 92.1 | 130.9 | 41.5 | 4.9 | 5.4 | 1.4 | 2.5 | 3.00 | 4.4 | X |
| Comp.Ex.2 | 93.6 | 52.2 | 56.8 | 60.0 | 41.4 | 138.4 | 87.1 | 95.5 | 98.2 | 51.3 | 2.7 | 3.5 | 3.2 | 2.6 | 3.02 | 2.5 | X |
| Comp.Ex.3 | 56.6 | 50.4 | 89.9 | 54.1 | 39.5 | 101.1 | 94.5 | 140.0 | 96.2 | 45.5 | 5.9 | 6.4 | 1.4 | 2.6 | 2.97 | 3.6 | X |
| Comp.Ex.4 | 60.5 | 54.2 | 58.4 | 91.6 | 37.4 | 106.9 | 97.9 | 93.4 | 134.0 | 40.6 | 5.6 | 6.2 | 3.1 | 1.4 | 2.98 | 3.5 | X |
| Comp.Ex.5 | 74.1 | 47.9 | 52.4 | 88.1 | 40.2 | 118.2 | 89.4 | 91.3 | 136.7 | 47.3 | 5.0 | 5.4 | 2.5 | 2.8 | 2.97 | 3.1 | X |
| Comp.Ex.6 | 62.4 | 52.0 | 55.1 | 91.8 | 39.8 | 111.2 | 91.5 | 94.8 | 135.1 | 43.6 | 5.2 | 5.6 | 3.2 | 1.4 | 3.00 | 3.6 | X |
| Comp.Ex.7 | 80.0 | 49.3 | 51.7 | 83.1 | 33.8 | 123.9 | 96.8 | 99.9 | 140.7 | 43.9 | 5.9 | 6.4 | 1.3 | 1.5 | 3.01 | 4.1 | X |
| Comp.Ex.8 | 88.6 | 61.9 | 53.0 | 61.8 | 35.6 | 139.0 | 102.7 | 92.5 | 111.1 | 46.5 | 5.4 | 6.0 | 3.2 | 1.4 | 2.99 | 4.0 | X |
| Comp.Ex.9 | 46.9 | 54.0 | 89.9 | 55.2 | 43.0 | 88.4 | 95.6 | 136.0 | 90.8 | 47.6 | 6.1 | 6.5 | 2.5 | 1.4 | 3.02 | 3.5 | X |
| Comp.Ex. 10 | 92.3 | 71.9 | 105.1 | 117.5 | 45.6 | 110.6 | 89.2 | 132.6 | 156.2 | 67.0 | 1.4 | 2.4 | 3.3 | 1.9 | 2.98 | 2.4 | X |
| Comp.Ex. 11 | 52.1 | 89.7 | 88.6 | 56.4 | 37.6 | 84.0 | 123.3 | 122.8 | 90.4 | 39.3 | 2.6 | 3.2 | 1.4 | 2.0 | 2.98 | 2.6 | X |
| Comp.Ex. 12 | 53.4 | 76.8 | 90.8 | 58.1 | 37.4 | 90.9 | 92.1 | 120.0 | 131.4 | 40.5 | 2.8 | 3.4 | 3.2 | 2.8 | 2.99 | 2.0 | X |
| Comp.Ex. 13 | 54.9 | 95.4 | 101.5 | 69.8 | 46.6 | 84.7 | 129.9 | 127.4 | 94.0 | 45.2 | 5.4 | 5.2 | 1.2 | 2.6 | 3.00 | 2.6 | X |
| Comp.Ex. 14 | 73.8 | 53.7 | 61.0 | 94.0 | 40.3 | 87.4 | 83.4 | 119.1 | 124.1 | 40.7 | 2.9 | 3.6 | 3.3 | 2.6 | 3.01 | 2.9 | X |
| Comp.Ex. 15 | 80.5 | 52.9 | 56.7 | 93.4 | 40.5 | 90.4 | 81.7 | 121.7 | 125.6 | 43.9 | 2.9 | 3.6 | 3.4 | 2.7 | 3.00 | 2.1 | X |
| Comp.Ex. 16 | 50.2 | 85.7 | 92.8 | 86.9 | 42.6 | 78.5 | 110.0 | 124.9 | 90.1 | 46.4 | 5.4 | 5.2 | 3.2 | 2.6 | 2.98 | 2.4 | X |

EP 3 235 859 B1

28

In Tables 4 to 9, average thickness is in units of "$\mu$m", AC layer thickness is in units of "$\mu$m", stress is in units of "MPa", boiling water shrinkage is in units of "%", modulus of elasticity is units of "%", and draw depth is in units of "mm".

As is clear from these results, in Examples 1 to 28, since the draw ratios of the resulting polyamide-based films were within a specified range, the difference between the maximum value and minimum value of stress at 5% elongation in the 0 degree direction (MD), 45 degree direction, 90 degree direction (TD) and 135 degree direction in uniaxial tensile tests of the resulting polyamide-based films was 35 MPa or less while the difference between the maximum value and minimum value at 15% elongation was 40 MPa or less. Laminates obtained using these polyamide-based films demonstrated high Erichsen values and had uniform ductility in all directions during cold forming. In other words, the polyamide-based films of each of Examples exhibited superior moldability without the occurrence of problems such as breakage of the aluminum foil, delamination or the formation of pinholes.

On the other hand, in Comparative Examples 1 to 16, since the draw ratios of the polyamide-based films did not satisfy a specific range, the difference between the maximum value and minimum value of stress at 5% elongation in the 0 degree direction (MD), 45 degree direction, 90 degree direction (TD) and 135 degree direction in uniaxial tension tests of the resulting polyamide-based films did not satisfy the requirement of 35 MPa or less, and the difference between the maximum value and minimum value at 15% elongation did not satisfy the requirement of 45 MPa or less. Consequently, -laminates obtained using these polyamide-based films of the comparative examples demonstrate low Erichsen values and have inferior moldability as a result of failing to demonstrate uniform ductility in all directions during cold forming.

Example 29

(1) Production of Polyamide-Based Film

An unstretched sheet was produced by using a Polyamide 6 resin (Unitika Ltd., A1030BRF, relative viscosity: 3.1, monomer content: 1.0% or less) and Silica-containing Nylon 6 resin that contains 6% by mass of silica (Unitika Ltd., A1030QW, relative viscosity: 2.7, monomer content: 1.0% or less) as raw materials, melting and kneading in an extruding machine at a component ratio of A1030BRF/Silica-containing Nylon resin of 98.7/1.3 (mass ratio), supplying to a T-die and then discharging in the form of a sheet. The resulting sheet was then wound around a metal drum adjusted to a temperature of 20°C followed by cooling and taking up into a roll. At this time, the feed rate of the polyamide resin was adjusted so that the thickness of the polyamide-based film obtained after stretching was 15 $\mu$m.

The resulting unstretched sheet was subjected to a stretching step by successive biaxial stretching. More specifically, stretching was carried out by a method involving stretching in the MD using rollers followed by stretching in the TD using a tenter.

First, the unstretched sheet was stretched in the MD to a total draw ratio in the MD of 2.85 times by passing the above-mentioned sheet over a plurality of rollers. At this time, stretching was carried out in two stages, the draw ratio in the first stage was 1.1 times, the draw ratio in the second stage was 2.59 times, and the total draw ratio (MD1 $\times$ MD2) was $1.1 \times 2.59 = 2.85$ times. As to heating conditions, a temperature gradient along the receiving direction of the film was formed so that the temperature (T1) at the start in the traveling direction was 58°C and the temperature (T2) at the end was 61°C in the MD stretching. At this time, transit time (heating time) of the film from the start (entrance) to the end (exit) of the film in the traveling direction was about 3 seconds.

After that, an aqueous polyurethane dispersion was coated onto one side of the film to a coating thickness after stretching of 0.03 $\mu$m to 0.08 $\mu$m with a gravure coater in order to form a primer layer following stretching in the MD. This was followed by stretching in the TD. As the above-mentioned aqueous dispersion,' an aqueous coating agent prepared by mixing 7 parts by mass of a tri(methoxymethyl)melamine resin (DIC Corp., Beckamine APM, Tts = 150°C) to 100 parts by mass of an anionic water-dispersible polyurethane resin (DIC Corp., Hydran KU400SF, Tmf = approx. 0°C, Tsf = 80°C) was used.

Next, stretching in the TD was carried out using a tenter as shown in Fig. 3. First, the film was stretched at a draw ratio of 3.2 times in the TD in the stretching zone while preheating to a temperature of 70°C in the preheating zone (preheating section). At this time, a temperature gradient along the receiving direction of the film was applied to the stretching zone (stretching section) so that the temperature at the start (T1) of the film in the traveling direction was 78°C and the temperature at the end (T2) was 100°C. At this time, transit time (heating time) of the film from the start (entrance) to the end (exit) of the film in the traveling direction in the stretching zone was about 3 seconds.

After having passed through the stretching zone, the film was subjected to relaxation heat treatment in the relaxation heat treatment zone (heat treatment section) under conditions of a temperature of 202°C and relaxation rate of 3%. A biaxially stretched polyamide-based film (wound length: 2000 m) was obtained by continuously producing 1000 m or more in this manner. The resulting film was taken up into the form of a roll.

(2) Laminate Fabrication

A laminate (formed of the polyamide-based film/aluminum foil/sealant film) was fabricated in the same manner as Example 1 with the exception of using the biaxially,stretched polyamide-based film obtained in (1) above and laminating the aluminum foil on the surface of the primer layer using a two-pack type polyurethane-based adhesive.

Examples 30-59 and Comparative Examples 17-36

Polyamide-based films were obtained using the same method as Example 29 with the exception of changing the production conditions and target thickness of the stretched polyamide-based film to those shown in Tables 10 to 12. Laminates were then fabricated in the same manner as Example 29 using the resulting polyamide-based films. However, the changes made in Examples 35, 43 and 51 are described in detail below.

(1) Example 35

After coating a two-component polyurethane-based adhesive (Toyo-Morton, Ltd., TM-K55/CAT-10L) onto the side of the polyamide-based film on which the aluminum foil was not laminated in the laminate obtained in Example 29 to a coated amount of 5 g/m$^2$, the coated film was dried for 10 seconds at 80°C. A PET film (Unitika Ltd., Emblet PET-12, thickness: 12 $\mu$m) was laminated onto the adhesive-coated side thereof to fabricate a laminate (formed of the PET film/polyamide-based film/aluminum foil/sealant film).

(2) Example 43

After coating a two-component polyurethane-based adhesive (Toyo-Morton, Ltd., TM-K55/CAT-10L) onto the side of the polyamide-based film on which the aluminum foil was not laminated in the laminate obtained in Example 36 to a coated amount of 5 g/m$^2$, the coated film was dried for 10 seconds at 80°C. A PET film (Unitika Ltd., Emblet PET-12, thickness: 12 $\mu$m) was laminated onto the adhesive-coated side thereof to fabricate a laminate (formed of the PET film, polyamide-based film, aluminum foil and sealant film).

(3) Example 51

A polyamide-based film was obtained using the same method as Example 29 with the exception of using a composition containing Polyamide 6 resin (Unitika Ltd., A1030BRF), Polyamide 66 resin (Unitika Ltd., A226) and Nylon 6 resin containing 6% by mass of silica at a component ratio of A1030BRF/A226/silica-containing nylon resin of 89.0/9.7/1.3 (mass ratio) as raw material in the production of the polyamide-based film indicated in Example 29. A laminate was fabricated in the same manner as Example 29 using the resulting polyamide-based film.

[Table 10]

| | MD Direction | | | | | TD Direction | | | | | | MD/TD | MD×TD | Target Thickness |
| | | | | | | Preheating section | Stretching Section | | | Heat Treatment Section | | | | |
| | Heat Treatment Temp. | | Draw Ratio | | | Heat Treatment Temp. | Heat Treatment Temp. | | Draw Ratio TD | Heat Treatment Temp. | Relaxation Rate | | | |
| | T1 | T2 | 1st stage MD1 | 2nd Stage MD2 | Total draw ratio MD1×MD2 | | T1 | T2 | | | | | | |
|---|---|---|---|---|---|---|---|---|---|---|---|---|---|---|
| Ex. 29 | 58 | 61 | 1.1 | 2.59 | 2.85 | 70 | 78 | 100 | 3.20 | 202 | 3 | 0.89 | 9.1 | 15 |
| Ex. 30 | 58 | 61 | 1.1 | 2.59 | 2.85 | 70 | 78 | 100 | 3.30 | 202 | 3 | 0.86 | 9.4 | 15 |
| Ex. 31 | 58 | 61 | 1.1 | 2.59 | 2.85 | 70 | 78 | 100 | 3.05 | 202 | 3 | 0.93 | 8.7 | 15 |
| Ex. 32 | 58 | 61 | 1.1 | 2.68 | 2.95 | 70 | 78 | 100 | 3.20 | 202 | 3 | 0.92 | 9.4 | 15 |
| Ex. 33 | 58 | 61 | 1.1 | 2.48 | 2.73 | 70 | 78 | 100 | 3.20 | 202 | 3 | 0.85 | 8.7 | 15 |
| Ex. 34 | 58 | 61 | 1.1 | 2.59 | 2.85 | 70 | 78 | 100 | 3.20 | 213 | 3 | 0.89 | 9.1 | 15 |
| Ex. 35 | Used Poly amide-Based Resin of Example 29 | | | | | | | | | | | | | |
| Ex. 36 | 60 | 64 | 1.1 | 2.59 | 2.85 | 78 | 84 | 104 | 3.20 | 202 | 4 | 0.89 | 9.1 | 25 |
| Ex. 37 | 54 | 57 | 1.2 | 2.38 | 2.85 | 65 | 74 | 96 | 3.20 | 202 | 3 | 0.89 | 9.1 | 12 |
| Ex. 38 | 54 | 57 | 1.2 | 2.38 | 2.85 | 65 | 74 | 96 | 3.30 | 202 | 3 | 0.86 | 9.4 | 12 |
| Ex. 39 | 54 | 57 | 1.2 | 2.38 | 2.85 | 65 | 74 | 96 | 3.05 | 202 | 3 | 0.93 | 8.7 | 12 |

EP 3 235 859 B1

31

(continued)

| | MD Direction | | | | | TD Direction | | | | | | MD/TD | MD×TD | Target Thickness |
| | | | | | | Preheating section | Stretching Section | | | Heat Treatment Section | | | | |
| | Heat Treatment Temp. | | Draw Ratio | | | Heat Treatment Temp. | Heat Treatment Temp. | | Draw Ratio TD | Heat Treatment Temp. | Relaxation Rate | | | |
| | T1 | T2 | 1st stage MD1 | 2nd Stage MD2 | Total draw ratio MD1×MD2 | | T1 | T2 | | | | | | |
|---|---|---|---|---|---|---|---|---|---|---|---|---|---|---|
| Ex. 40 | 54 | 57 | 1.2 | 2.46 | 2.95 | 65 | 74 | 96 | 3.20 | 202 | 3 | 0.92 | 9.4 | 12 |
| Ex. 41 | 54 | 57 | 1.2 | 2.28 | 2.73 | 65 | 74 | 96 | 3.20 | 202 | 3 | 0.85 | 8.7 | 12 |
| Ex. 42 | 54 | 57 | 1.2 | 2.38 | 2.85 | 65 | 74 | 96 | 3.20 | 213 | 3 | 0.89 | 9.1 | 12 |
| Ex. 43 | Used Polyamide-Based Resin of Example 36 | | | | | | | | | | | | | |

[Table 11]

| | MD Direction | | | | | TD Direction | | | | | | MD/TD | MD×TD | Target Thickness |
| | Heat Treatment Temp. | | Draw Ratio | | | Preheating section | Stretching Section | | | Heat Treatment Section | | | | |
| | | | | | | Heat Treatment Temp. | Heat Treatment Temp. | | Draw Ratio TD | Heat Treatment Temp. | Relaxation Rate | | | |
| | T1 | T2 | 1st stage MD1 | 2nd Stage MD2 | Total draw ratio MD1×MD2 | | T1 | T2 | | | | | | |
|---|---|---|---|---|---|---|---|---|---|---|---|---|---|---|
| Ex. 44 | 52 | 55 | 1.2 | 2.38 | 2.85 | 64 | 72 | 95 | 3.20 | 202 | 3 | 0.89 | 9.1 | 10 |
| Ex. 45 | 52 | 55 | 1.2 | 2.38 | 2.85 | 64 | 72 | 95 | 3.30 | 202 | 3 | 0.86 | 9.4 | 10 |
| Ex. 46 | 52 | 55 | 1.2 | 2.38 | 2.85 | 64 | 72 | 95 | 3.05 | 202 | 3 | 0.93 | 8.7 | 10 |
| Ex. 47 | 52 | 55 | 1.2 | 2.38 | 2.95 | 64 | 72 | 95 | 3.20 | 202 | 3 | 0.92 | 9.4 | 10 |
| Ex. 48 | 52 | 55 | 1.2 | 2.38 | 2.73 | 64 | 72 | 95 | 3.20 | 202 | 2 | 0.85 | 8.7 | 10 |
| Ex. 49 | 52 | 55 | 1.2 | 2.38 | 2.85 | 64 | 72 | 95 | 3.20 | 213 | 4 | 0.89 | 9.1 | 10 |
| Ex. 50 | 50 | 54 | 1.1 | 2.59 | 2.85 | 63 | 70 | 94 | 3.20 | 202 | 5 | 0.89 | 9.1 | 8 |
| Ex. 51 | 60 | 64 | 1.1 | 2.59 | 2.85 | 80 | 90 | 110 | 3.20 | 202 | 5 | 0.89 | 9.1 | 12 |
| Ex. 52 | 59 | 63 | 1.05 | 2.71 | 2.85 | 70 | 78 | 100 | 3.20 | 202 | 2 | 0.89 | 9.1 | 15 |
| Ex. 53 | 58 | 61 | 1.1 | 2.59 | 2.85 | 69 | 76 | 102 | 3.20 | 202 | 2 | 0.89 | 9.1 | 15 |
| Ex. 54 | 54 | 63 | 1.05 | 2.71 | 2.85 | 65 | 74 | 96 | 3.20 | 202 | 3 | 0.89 | 9.1 | 12 |

(continued)

| | MD Direction | | | | | TD Direction | | | | | | MD/TD | MD×TD | Target Thickness |
|---|---|---|---|---|---|---|---|---|---|---|---|---|---|---|
| | | | | | | Preheating section | Stretching Section | | | Heat Treatment Section | | | | |
| | Heat Treatment Temp. | | Draw Ratio | | | Heat Treatment Temp. | Heat Treatment Temp. | | Draw Ratio TD | Heat Treatment Temp. | Relaxation Rate | | | |
| | T1 | T2 | 1st stage MD1 | 2nd Stage MD2 | Total draw ratio MD1×MD2 | | T1 | T2 | | | | | | |
| Ex. 55 | 55 | 58 | 1.2 | 2.38 | 2.85 | 65 | 73 | 98 | 3.20 | 202 | 3 | 0.89 | 9.1 | 12 |
| Ex. 56 | 54 | 63 | 1.05 | 2.81 | 2.95 | 65 | 74 | 96 | 3.20 | 202 | 4 | 0.92 | 9.4 | 12 |
| Ex. 57 | 55 | 58 | 1.2 | 2.46 | 2.95 | 65 | 73 | 98 | 3.20 | 202 | 4 | 0.92 | 9.4 | 12 |
| Ex. 58 | 70 | 74 | 1.1 | 2.59 | 2.85 | 78 | 84 | 104 | 3.20 | 202 | 4 | 0.89 | 9.1 | 25 |
| Ex. 59 | 60 | 64 | 1.1 | 2.59 | 2.85 | 78 | 90 | 115 | 3.20 | 202 | 4 | 0.89 | 9.1 | 25 |

[Table 12]

| | MD Direction | | | | | TD Direction | | | | | | MD/TD | MD×TD | Target Thickness |
| | | | | | | Preheating section | Stretching Section | | | Heat Treatment Section | | | | |
| | Heat Treatment Temp. | | Draw Ratio | | | Heat Treatment Temp. | Heat Treatment Temp. | | Draw Ratio TD | Heat Treatment Temp. | Relaxation Rate | | | |
| | T1 | T2 | 1st stage MD1 | 2nd Stage MD2 | Total draw ratio MD1×MD2 | | T1 | T2 | | | | | | |
|---|---|---|---|---|---|---|---|---|---|---|---|---|---|---|
| Comp.Ex.17 | 58 | 61 | 1.1 | 2.33 | 2.56 | 70 | 78 | 100 | 3.20 | 202 | 3 | 0.8 | 8.2 | 15 |
| Comp.Ex.18 | 58 | 61 | 1.1 | 2.55 | 2.80 | 70 | 78 | 100 | 3.60 | 202 | 3 | 0.78 | 10.1 | 15 |
| Comp.Ex.19 | 58 | 61 | 1.2 | 2.33 | 2.80 | 70 | 78 | 100 | 2.80 | 202 | 3 | 1.00 | 7.8 | 15 |
| Comp.Ex.20 | 58 | 61 | 1.2 | 2.67 | 3.20 | 70 | 78 | 100 | 3.20 | 202 | 3 | 1.00 | 10.2 | 15 |
| Comp.Ex.21 | 58 | 61 | 1.2 | 2.29 | 2.75 | 70 | 78 | 100 | 3.30 | 202 | 3 | 0.83 | 9.1 | 15 |
| Comp.Ex.22 | 58 | 61 | 1.2 | 2.50 | 3.00 | 70 | 78 | 100 | 3.10 | 202 | 3 | 0.97 | 9.3 | 15 |
| Comp.Ex.23 | 58 | 61 | 1.2 | 2.25 | 2.70 | 70 | 78 | 100 | 3.10 | 202 | 3 | 0.87 | 8.4 | 15 |
| Comp.Ex.24 | 58 | 61 | 1.2 | 2.46 | 2.95 | 70 | 78 | 100 | 3.40 | 202 | 3 | 0.87 | 10.0 | 15 |
| Comp.Ex.25 | 58 | 61 | 1.2 | 2.50 | 3.00 | 70 | 78 | 100 | 2.80 | 202 | 3 | 1.07 | 8.4 | 15 |
| Comp.Ex.26 | 58 | 61 | 1.2 | 2.13 | 2.56 | 70 | 78 | 100 | 3.20 | 202 | 3 | 0.8 | 8.2 | 12 |
| Comp.Ex.27 | 58 | 61 | 1.2 | 2.33 | 2.80 | 70 | 78 | 100 | 3.60 | 202 | 3 | 0.78 | 10.1 | 12 |
| Comp.Ex.28 | 58 | 61 | 1.2 | 2.23 | 2.80 | 70 | 78 | 100 | 2.80 | 202 | 3 | 1.00 | 7.8 | 12 |
| Comp.Ex.29 | 58 | 61 | 1.2 | 2.25 | 2.70 | 70 | 78 | 100 | 3.10 | 202 | 3 | 0.87 | 8.4 | 12 |
| Comp.Ex.30 | 85 | 70 | 2.1 | 1.6 | 3.36 | 130 | 130 | 130 | 4.00 | 210 | 5 | 0.84 | 13.44 | 15 |
| Comp.Ex.31 | 72 | 75 | 1.1 | 2.59 | 2.85 | 65 | 74 | 96 | 3.20 | 202 | 3 | 0.89 | 9.10 | 12 |
| Comp.Ex.32 | 52 | 56 | 1.1 | 2.59 | 2.85 | 55 | 58 | 82 | 3.30 | 202 | 3 | 0.89 | 9.10 | 12 |
| Comp.Ex.33 | 72 | 75 | 1.1 | 2.41 | 2.65 | 55 | 58 | 82 | 3.05 | 202 | 3 | 0.86 | 9.40 | 12 |
| Comp.Ex.34 | 54 | 57 | 1.1 | 2.59 | 2.85 | 55 | 58 | 82 | 3.20 | 202 | 3 | 0.93 | 8.70 | 12 |
| Comp.Ex.35 | 46 | 49 | 1.1 | 2.59 | 2.85 | 55 | 58 | 82 | 3.20 | 202 | 3 | 0.92 | 9.40 | 12 |

| | MD Direction | | | | | TD Direction | | | | | | MD/TD | MD×TD | Target Thickness |
|---|---|---|---|---|---|---|---|---|---|---|---|---|---|---|
| | | | | | | Preheating section | Stretching Section | | | Heat Treatment Section | | | | |
| | Heat Treatment Temp. | | Draw Ratio | | | Heat Treatment Temp. | Heat Treatment Temp. | | Draw Ratio TD | Heat Treatment Temp. | Relaxation Rate | | | |
| | T1 | T2 | 1st stage MD1 | 2nd Stage MD2 | Total draw ratio MD1×MD2 | | T1 | T2 | | | | | | |
| Comp.Ex.36 | 54 | 57 | 1.1 | 2.41 | 2.65 | 55 | 58 | 82 | 3.20 | 213 | 3 | 0.85 | 8.70 | 12 |

In Tables 10 to 12, each draw ratio indicates the draw ratio based on a value of 1. In addition, each heat treatment temperature is in units of "°C", relaxation rate is in units of "%", and target thicknesses are indicated in "μm".

Test Example 2

Properties were evaluated for the polyamide-based films and laminates obtained in Examples 29 to 59 and Comparative Examples 17 to 36. The evaluation results are shown in Tables 13 to 18. Furthermore, the methods used to measure and evaluate each property were the same as those used in Test Example 1.

[Table 13]

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Ex. 29 | 15.1 | 0.156 | 15.2 | 0.150 | 15.1 | 0.152 | 0.05 |
| Ex. 30 | 15.0 | 0.149 | 15.0 | 0.148 | 15.0 | 0.150 | 0.04 |
| Ex. 31 | 14.9 | 0.152 | 15.1 | 0.154 | 14.9 | 0.150 | 0.07 |
| Ex. 32 | 15.0 | 0.156 | 15.1 | 0.156 | 14.9 | 0.155 | 0.08 |
| Ex. 33 | 14.8 | 0.145 | 14.9 | 0.140 | 15.0 | 0.142 | 0.05 |
| Ex. 34 | 15.1 | 0.150 | 15.0 | 0.152 | 15.1 | 0.149 | 0.04 |
| Ex. 35 | Used Polyamide-Based Film of Example 29 | | | | | | |
| Ex. 36 | 25.2 | 0.154 | 25.2 | 0.156 | 25.1 | 0.152 | 0.07 |
| Ex. 37 | 11.8 | 0.136 | 11.9 | 0.140 | 11.8 | 0.136 | 0.05 |
| Ex. 38 | 11.7 | 0.131 | 11.8 | 0.132 | 11.8 | 0.130 | 0.04 |
| Ex. 39 | 11.9 | 0.134 | 11.9 | 0.136 | 12.0 | 0.135 | 0.04 |
| Ex. 40 | 11.8 | 0.130 | 12.0 | 0.132 | 11.9 | 0.134 | 0.02 |
| Ex. 41 | 12.0 | 0.129 | 12.0 | 0.134 | 12.0 | 0.132 | 0.05 |
| Ex. 42 | 11.9 | 0.128 | 12.0 | 0.136 | 11.9 | 0.131 | 0.06 |
| Ex. 43 | Used Polyamide-Based Film of Example 36 | | | | | | |

[Table 14]

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Ex. 44 | 9.8 | 0.119 | 10.0 | 0.118 | 9.9 | 0.123 | 0.02 |
| Ex. 45 | 9.9 | 0.120 | 9.9 | 0.125 | 9.9 | 0.124 | 0.04 |
| Ex. 46 | 10.0 | 0.125 | 10.0 | 0.127 | 9.9 | 0.126 | 0.03 |
| Ex. 47 | 9.9 | 0.118 | 9.9 | 0..119 | 9.8 | 0.120 | 0.03 |
| Ex. 48 | 9.8 | 0.120 | 9.9 | 0.125 | 9.9 | 0.123 | 0.05 |
| Ex. 49 | 10.1 | 0.124 | 10.1 | 0.125 | 10.0 | 0.126 | 0.04 |
| Ex. 50 | 8.2 | 0.126 | 8.1 | 0.125 | 8.1 | 0.123 | 0.04 |
| Ex. 51 | 12.2 | 0.157 | 12.1 | 0.156 | 12.1 | 0.157 | 0.05 |
| Ex. 52 | 15.1 | 0.158 | 15.0 | 0.160 | 15.0 | 0.160 | 0.03 |
| Ex. 53 | 15.2 | 0.158 | 15.1 | 0.159 | 15.1 | 0.158 | 0.06 |
| Ex. 54 | 12.1 | 0.123 | 12.0 | 0.120 | 12.1 | 0.120 | 0.04 |
| Ex. 55 | 11.9 | 0.126 | 12.0 | 0.124 | 12.0 | 0.123 | 0.06 |
| Ex. 56 | 11.9 | 0.119 | 12.1 | 0.120 | 12.0 | 0.123 | 0.04 |
| Ex. 57 | 12.1 | 0.126 | 12.0 | 0.124 | 12.1 | 0.123 | 0.03 |
| Ex. 58 | 24.9 | 0.158 | 25.0 | 0.159 | 24.9 | 0.157 | 0.05 |
| Ex. 59 | 25.0 | 0.154 | 24.8 | 0.156 | 24.8 | 0.155 | 0.05 |

[Table 15]

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Comp.Ex. 17 | 14.9 | 0.288 | 15.0 | 0.290 | 15.00 | 0.294 | 0.06 |
| Comp.Ex. 18 | 15.0 | 0.300 | 14.9 | 0.312 | 15.10 | 0.298 | 0.04 |

(continued)

| | Average Thickness A | Thickness Accuracy A (standard deviation) | Average Thickness B | Thickness Accuracy B (standard deviation) | Average Thickness C | Thickness Accuracy C (standard deviation) | AC Layer Thickness |
|---|---|---|---|---|---|---|---|
| Comp.Ex. 19 | 14.9 | 0.314 | 15.0 | 0.320 | 15.00 | 0.316 | 0.05 |
| Comp.Ex. 20 | 15.1 | 0.333 | 15.1 | 0.329 | 15.00 | 0.326 | 0.05 |
| Comp.Ex. 21 | 14.8 | 0.228 | 14.9 | 0.225 | 14.90 | 0.230 | 0.06 |
| Comp.Ex. 22 | 15.0 | 0.245 | 15.0 | 0.242 | 14.90 | 0.240 | 0.08 |
| Comp.Ex. 23 | 15.1 | 0.256 | 15.1 | 0.252 | 15.10 | 0.252 | 0.04 |
| Comp.Ex. 24 | 14.9 | 0.279 | 15.1 | 0.276 | 14.90 | 0.280 | 0.06 |
| Comp.Ex. 25 | 15.2 | 0.276 | 15.2 | 0.280 | 15.10 | 0.282 | 0.05 |
| Comp.Ex. 26 | 12.1 | 0.231 | 12.1 | 0.230 | 12.00 | 0.228 | 0.06 |
| Comp.Ex. 27 | 12.0 | 0.259 | 12.0 | 0.254 | 11.90 | 0.252 | 0.04 |
| Comp.Ex. 28 | 12.0 | 0.288 | 12.2 | 0.290 | 12.10 | 0.292 | 0.05 |
| Comp.Ex. 29 | 11.9 | 0.228 | 11.9 | 0.232 | 12.00 | 0.230 | 0.04 |
| Comp.Ex. 30 | 15.1 | 0.335 | 15.2 | 0.338 | 15.10 | 0.334 | 0.05 |
| Comp.Ex. 31 | 12.1 | 0.455 | 12.2 | 0.460 | 12.00 | 0.450 | 0.05 |
| Comp.Ex. 32 | 11.8 | 0.510 | 12.0 | 0.516 | 12.00 | 0.507 | 0.05 |
| Comp.Ex. 33 | 12.2 | 0.500 | 11.9 | 0.505 | 12.10 | 0.501 | 0.05 |
| Comp.Ex. 34 | 11.9 | 0.402 | 12.1 | 0.413 | 12.00 | 0.410 | 0.05 |
| Comp.Ex. 35 | 12.0 | 0.452 | 12.0 | 0.450 | 12.00 | 0.459 | 0.05 |
| Comp.Ex. 36 | 12.0 | 0.479 | 11.9 | 0.469 | 12.00 | 0.475 | 0.05 |

[Table 16]

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Ex.29 | 57.0 | 53.2 | 53.5 | 69.8 | 16.6 | 90.5 | 84.5 | 91.0 | 106.2 | 21.7 | 2.5 | 3.3 | 2.1 | 2.0 | 2.98 | 10.0 | ○ |
| Ex.30 | 67.0 | 57.3 | 55.2 | 79.2 | 24.0 | 94.0 | 82.5 | 92.8 | 112.3 | 29.8 | 2.9 | 4.2 | 2.4 | 2.2 | 2.98 | 8.4 | ○ |
| Ex.31 | 70.0 | 54.5 | 52.0 | 70.6 | 18.6 | 90.5 | 95.5 | 100.0 | 112.5 | 22.0 | 3.9 | 4.4 | 2.2 | 1.9 | 3.00 | 9.6 | ○ |
| Ex.32 | 71.5 | 52.3 | 52.8 | 72.6 | 20.3 | 94.0 | 86.0 | 92.8 | 113.5 | 27.5 | 3.8 | 4.3 | 2.3 | 2.1 | 3.00 | 8.8 | ○ |
| Ex.33 | 67.0 | 57.5 | 80.3 | 61.5 | 22.8 | 116.5 | 98.1 | 109.0 | 127.3 | 29.2 | 4.1 | 4.6 | 2.0 | 1.9 | 2.99 | 8.2 | ○ |
| Ex.34 | 70.0 | 54.0 | 52.0 | 70.6 | 18.6 | 90.5 | 83.4 | 91.0 | 106.5 | 23.1 | 2.1 | 2.4 | 2.1 | 1.9 | 2.98 | 9.4 | ○ |
| Ex.35 | Used Polyamide-Based Film of Example 29 | | | | | | | | | | | | | | | 9.0 | ○ |
| Ex.36 | 57.4 | 57.4 | 53.5 | 69.6 | 16.1 | 96.4 | 90.4 | 93.8 | 111.8 | 21.4 | 2.3 | 2.4 | 2.2 | 2 | 3.00 | 9.0 | ○ |
| Ex.37 | 59.0 | 52.4 | 51.5 | 66.6 | 15.1 | 89.5 | 82.1 | 90.0 | 101.9 | 19.8 | 2.5 | 3.2 | 2.3 | 2.1 | 3.01 | 9.8 | ○ |
| Ex.38 | 65.4 | 59.4 | 53.8 | 77.9 | 24.1 | 93.7 | 81.2 | 94.8 | 108.1 | 26.9 | 3.5 | 4.1 | 2.2 | 2.0 | 2.99 | 8.6 | ○ |
| Ex.39 | 65.3 | 53.5 | 51.3 | 68.9 | 17.6 | 89.6 | 94.5 | 101.7 | 108.1 | 18.5 | 3.9 | 4.8 | 2.3 | 1.9 | 2.98 | 9.9 | ○ |
| Ex.40 | 66.5 | 51.0 | 52.8 | 72.7 | 21.7 | 97.4 | 83.3 | 91.5 | 109.6 | 26.3 | 3.9 | 4.3 | 2.3 | 2.2 | 2.98 | 8.7 | ○ |
| Ex.41 | 65.0 | 57.5 | 79.4 | 63.7 | 21.9 | 117.2 | 94.8 | 107.8 | 124.7 | 29.9 | 4.3 | 4.9 | 2.2 | 1.9 | 3.00 | 8.6 | ○ |
| Ex.42 | 64.0 | 53.5 | 49.4 | 67.8 | 18.4 | 88.4 | 81.8 | 89.2 | 103.1 | 21.3 | 2.2 | 2.6 | 2.3 | 1.9 | 2.97 | 9.9 | ○ |
| Ex.43 | Used Polyamide-Based Film of Example 36 | | | | | | | | | | | | | | | 9.4 | ○ |

[Table 17]

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Ex. 44 | 56.5 | 51.2 | 53.8 | 67.8 | 16.6 | 91.0 | 83.9 | 93.5 | 103.6 | 19.7 | 2.7 | 3.1 | 2.3 | 2.0 | 2.98 | 9.9 | ○ |
| Ex. 45 | 64.8 | 59.0 | 56.4 | 75.8 | 19.4 | 100.8 | 93.5 | 89.7 | 114.3 | 24.6 | 3.6 | 4.2 | 2.4 | 2.1 | 2.99 | 9.4 | ○ |
| Ex. 46 | 73.5 | 63.2 | 50.4 | 68.6 | 23.1 | 113.5 | 90.4 | 86.5 | 107.4 | 27.0 | 3.9 | 4.4 | 2.3 | 2.0 | 2.98 | 8.6 | ○ |
| Ex. 47 | 59.8 | 58.9 | 55.4 | 74.3 | 18.9 | 100.7 | 92.6 | 86.4 | 113.8 | 27.4 | 3.8 | 4.3 | 2.4 | 2.2 | 2.97 | 8.9 | ○ |
| Ex. 48 | 71.3 | 56.1 | 78.8 | 60.7 | 22.7 | 105.6 | 90.2 | 110.4 | 118.5 | 28.3 | 4.2 | 4.7 | 2.3 | 2.1 | 2.98 | 8.7 | ○ |
| Ex. 49 | 72.1 | 55.8 | 51.4 | 68.7 | 20.7 | 112.6 | 83.1 | 90.8 | 108.7 | 29.5 | 2.1 | 2.6 | 2.1 | 1.8 | 3.01 | 9.5 | ○ |
| Ex. 50 | 56.8 | 53.8 | 55.2 | 69.1 | 15.3 | 92.7 | 83.6 | 90.1 | 111.1 | 27.5 | 3 | 3.4 | 2.3 | 2 | 3.00 | 9.9 | ○ |
| Ex. 51 | 59.6 | 55.4 | 51.9 | 74.5 | 22.6 | 96.7 | 89.3 | 87.9 | 115.7 | 27.8 | 2.4 | 3 | 2.2 | 2 | 2.99 | 8.7 | ○ |
| Ex. 52 | 52.9 | 55.4 | 56.4 | 70.1 | 17.2 | 90.0 | 92.6 | 91.0 | 113.8 | 23.8 | 3.6 | 4.2 | 2.4 | 2.2 | 2.98 | 9.1 | ○ |
| Ex. 53 | 54.6 | 55.0 | 59.4 | 72.8 | 18.2 | 82.9 | 86.9 | 90.7 | 110.0 | 27.1 | 2.7 | 3.6 | 2.0 | 1.8 | 3.00 | 9.5 | ○ |
| Ex. 54 | 52.4 | 54.2 | 59.1 | 72.1 | 19.7 | 82.9 | 85.9 | 90.3 | 109.8 | 26.9 | 3.9 | 4.4 | 2.5 | 2.2 | 3.01 | 9.4 | ○ |
| Ex. 55 | 53.8 | 56.7 | 62.1 | 73.7 | 19.9 | 86.7 | 88.0 | 96.7 | 111.7 | 25.0 | 2.6 | 3.2 | 1.9 | 1.9 | 2.99 | 9.5 | ○ |
| Ex. 56 | 54.2 | 52.7 | 58.4 | 72.4 | 19.7 | 92.6 | 86.9 | 94.2 | 112.7 | 25.8 | 3.5 | 4.0 | 2.4 | 2.1 | 2.99 | 9.5 | ○ |

(continued)

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Ex. 57 | 58.7 | 56.2 | 64.8 | 76.0 | 19.8 | 98.4 | 88.0 | 104.8 | 114.7 | 26.7 | 3.4 | 4.2 | 2.5 | 2.1 | 2.97 | 9.6 | ○ |
| Ex. 58 | 53.9 | 74.5 | 76.8 | 54.6 | 22.9 | 86.7 | 109.6 | 117.5 | 89.5 | 30.8 | 3.5 | 2.9 | 2.2 | 2.0 | 2.99 | 8.6 | ○ |
| Ex. 59 | 56.3 | 78.3 | 79.6 | 65.3 | 23.3 | 88.9 | 108.2 | 119.2 | 92.6 | 30.3 | 3.7 | 3.0 | 2.4 | 2.1 | 3.00 | 8.5 | ○ |

[Table 18]

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Comp.Ex. 17 | 57.2 | 47.3 | 53.5 | 83.6 | 36.3 | 97.0 | 88.3 | 93.5 | 130.9 | 42.6 | 5.1 | 5.5 | 1.4 | 2.6 | 3.01 | 3.9 | X |
| Comp.Ex. 18 | 92.4 | 50.2 | 53.5 | 56.0 | 42.2 | 140.6 | 86.0 | 93.5 | 96.0 | 54.6 | 2.7 | 3.4 | 3.3 | 2.7 | 2.99 | 2.1 | X |
| Comp.Ex. 19 | 57.9 | 50.8 | 88.8 | 52.8 | 38.1 | 99.8 | 96.7 | 138.7 | 97.8 | 42.0 | 5.8 | 6.3 | 1.4 | 2.7 | 2.98 | 3.5 | X |
| Comp.Ex. 20 | 62.4 | 55.6 | 56.4 | 91.0 | 35.4 | 104.8 | 95.4 | 96.4 | 135.6 | 40.2 | 5.5 | 6.1 | 3.1 | 1.3 | 3.00 | 3.2 | X |
| Comp.Ex. 21 | 77.9 | 48.0 | 46.3 | 84.3 | 38.0 | 117.9 | 92.4 | 90.4 | 134.2 | 43.8 | 5.1 | 5.3 | 2.5 | 2.8 | 2.97 | 3.5 | X |
| Comp.Ex. 22 | 60.1 | 52.4 | 54.0 | 92.4 | 40.0 | 110.3 | 90.2 | 93.5 | 132.4 | 42.2 | 5.2 | 5.4 | 3.3 | 1.4 | 2.98 | 3.0 | X |
| Comp.Ex. 23 | 78.2 | 47.9 | 50.2 | 79.9 | 32.0 | 124.6 | 97.5 | 100.3 | 141.2 | 43.7 | 5.8 | 6.5 | 1.4 | 1.5 | 2.99 | 4.2 | △ |
| Comp.Ex. 24 | 84.9 | 59.8 | 50.4 | 60.0 | 34.5 | 138.5 | 103.4 | 91.0 | 110.0 | 47.5 | 5.5 | 6.2 | 3.2 | 1.4 | 2.99 | 4.6 | △ |
| Comp.Ex. 25 | 47.6 | 54.6 | 87.4 | 53.2 | 39.8 | 87.5 | 96.5 | 137.7 | 93.7 | 50.2 | 6.2 | 6.4. | 2.5 | 1.4 | 2.98 | 3.0 | X |
| Comp.Ex. 26 | 56.7 | 48.5 | 52.0 | 86.7 | 38.2 | 96.5 | 86.7 | 92.1 | 128.6 | 41.9 | 5.0 | 5.4 | 1.3 | 2.7 | 3.00 | 3.5 | X |
| Comp.Ex. 27 | 91.2 | 49.8 | 53.6 | 56.1 | 41.4 | 138.4 | 84.2 | 91.5 | 94.6 | 54.2 | 2.8 | 3.4 | 3.3 | 2.8 | 3.00 | 4.5 | △ |
| Comp.Ex. 28 | 56.4 | 49.7 | 86.3 | 53.0 | 36.6 | 100.2 | 94.5 | 134.0 | 99.6 | 39.5 | 5.6 | 6.2 | 1.3 | 2.7 | 2.98 | 4.1 | △ |
| Comp.Ex. 29 | 63.8 | 55.4 | 58.7 | 92.4 | 37.0 | 102.2 | 96.8 | 99.1 | 139.6 | 42.8 | 5.5 | 6.0 | 3.2 | 1.4 | 2.98 | 3.0 | X |

| | Stress at 5% Elongation | | | | | Stress at 15% Elongation | | | | | Boiling Water Shrinkage | | Modulus of Elasticity | | Relative Viscosity | Draw Depth | Wet heat Resistance |
|---|---|---|---|---|---|---|---|---|---|---|---|---|---|---|---|---|---|
| | MD | 45° | TD | 135° | Stress Difference | MD | 45° | TD | 135° | Stress Difference | MD | TD | MD | TD | | | |
| Comp.Ex. 30 | 92.6 | 73.9 | 102.8 | 120.0 | 46.1 | 112.6 | 92.6 | 134.5 | 154.0 | 61.4 | 1.4 | 2.3 | 3.4 | 2.0 | 2.98 | 2.1 | X |
| Comp.Ex. 31 | 55.8 | 90.7 | 88.0 | 58.4 | 34.9 | 82.6 | 125.0 | 124.6 | 85.4 | 42.4 | 2.5 | 3.2 | 1.5 | 2.1 | 2.99 | 3.4 | X |
| Comp.Ex. 32 | 51.9 | 74.5 | 86.4 | 54.0 | 34.5 | 88.4 | 96.8 | 129.0 | 117.4 | 40.6 | 2.7 | 3.3 | 3.1 | 2.8 | 2.99 | 2.5 | X |
| Comp.Ex. 33 | 59.3 | 98.4 | 108.9 | 76.1 | 49.6 | 83.6 | 130.0 | 129.7 | 91.7 | 46.4 | 5.2 | 5.1 | 1.3 | 2.7 | 3.00 | 2.9 | X |
| Comp.Ex. 34 | 72.6 | 51.2 | 60.7 | 91.8 | 40.6 | 89.7 | 81.9 | 115.6 | 125.4 | 43.5 | 2.8 | 3.7 | 3.3 | 2.6 | 2.98 | 3.1 | X |
| Comp.Ex. 35 | 82.6 | 51.8 | 54.9 | 91.9 | 40.1 | 91.6 | 79.0 | 86.7 | 123.4 | 44.4 | 3 | 3.5 | 3.3 | 2.6 | 2.98 | 2.6 | X |
| Comp.Ex. 36 | 52.0 | 87.9 | 94.3 | 58.1 | 42.3 | 79.6 | 112.0 | 126.8 | 88.6 | 47.2 | 5.3 | 5.1 | 3.1 | 2.6 | 3.00 | 3.0 | X |

EP 3 235 859 B1

In Tables 13 to 18, average thickness is in units of "$\mu$m", AC layer thickness is in units of "$\mu$m", stress is in units of "MPa", boiling water shrinkage is in units of "%", modulus of elasticity is units of "%", and draw depth is in units of "mm".

In Examples 29 to 59, since the draw ratios of the polyamide-based films in particular are within a specified range, the difference between the maximum value and minimum value of stress at 5% elongation in the 0 degree direction (MD), 45 degree direction, 90 degree direction (TD) and 135, degree direction in uniaxial tensile tests of the resulting polyamide-based films was 35 MPa or less while the difference between the maximum value and minimum value at 15% elongation was 40 MPa or less. Laminates obtained using these polyamide-based films demonstrated high Erichsen values and had uniform ductility in all directions during cold forming. In other words, the polyamide-based films of each of Examples demonstrated superior moldability without the occurrence of problems such as breakage of the aluminum foil, delamination or the formation of pinholes.

In addition, since the polyamide-based films obtained in Examples 29 to 59 have a primer layer containing an anionic water-dispersible polyurethane resin on one side thereof, laminates using these polyamide-based films were determined to have excellent moisture heat resistance.

On the other hand, in Comparative Examples 17 to 36, since the draw ratios of the polyamide-based films in particular do not satisfy a specific range, the above-mentioned A and B values in four directions formed of the 0 degree direction, 45 degree direction, 90 degree direction and 135 degree direction do not satisfy the requirements of the present invention. Accordingly, laminates obtained using these polyamide-based films of the comparative examples demonstrate low Erichsen values and have inferior moldability as a result of failing to have uniform ductility in all directions during cold forming.

**Claims**

1. A method for producing a polyamide-based film, comprising:

   (1) a sheet molding step for obtaining an unstretched sheet by forming a molten mixture containing a polyamide resin into the form of a sheet; and
   (2) a stretching step for obtaining a stretched film by biaxially stretching the unstretched sheet successively in an MD and a TD, wherein
   (3) the following formulas a) and b) are both satisfied:

       (a) $0.85 \leq X/Y \leq 0.95$
       (b) $8.5 \leq X \times Y \leq 9.5$

   wherein X represents a draw ratio in the MD and Y represents a draw ratio in the TD, and
   (4) the stretching step includes stretching in the MD with rollers and stretching in the TD with a tenter,

   wherein the stretching step involves successive biaxial stretching comprising:

   (2-1) a first stretching step of obtaining a first stretched film by stretching the unstretched sheet in the MD at a temperature of 50°C to 120°C; and
   (2-2) a second stretching step of obtaining a second stretched film by stretching the first stretched film in the TD at a temperature of 70°C to 150°C, and wherein the second stretched film is further subjected to relaxation heat treatment at a temperature of 180°C to 230°C.

2. A polyamide-based film obtainable by the method of claim 1, wherein

   (1) the difference between the maximum value and minimum value of the respective stress at 5% elongation as determined by a uniaxial tensile test is 35 MPa or less in four directions formed of a specific direction from an arbitrary point in the film that is designated as 0 degrees and directions at 45 degrees, 90 degrees and 135 degrees relative to the specific direction in the clockwise direction,
   (2) the difference between the maximum value and the minimum value of the respective stress at 15% elongation as determined by the uniaxial tensile test in the four directions is 40 MPa or less, and
   (3) the value of standard deviation with respect to average thickness in eight directions formed of a specific direction from an arbitrary point in the film that is designated as 0 degrees and directions at 45 degrees, 90 degrees, 135 degrees, 180 degrees, 225 degrees, 270 degrees and 315 degrees relative to the specific direction is 0.200 or less.

3. The polyamide-based film according to claim 2, wherein the polyamide-based film has an average thickness of 15 µm or less.

4. The polyamide-based film according to claim 2, wherein the polyamide-based film has a boiling water shrinkage of 2.0% to 5.0% in an MD and 2.5% to 5.5% in a TD, and a modulus of elasticity of 1.5% to 3.0% in the MD and 1.5% to 2.5% in the TD.

5. The polyamide-based film according to claim 2, wherein the polyamide-based film has a relative viscosity of 2.9 to 3.1.

6. The polyamide-based film according to claim 2, wherein the polyamide-based film has a primer layer on at least one side of the film surface.

7. A laminate comprising: the polyamide-based film according to claim 2; and metal foil laminated on/above the film.

8. A laminate comprising: the polyamide-based film according to claim 6; and metal foil laminated on the primer layer on that film.

9. A container comprising the laminate according to claim 7 or 8.

**Patentansprüche**

1. Verfahren zur Herstellung eines Films auf Polyamidbasis, umfassend:

(1) einen Blattformungsschritt zum Erhalten eines ungestreckten Blatts durch Bilden eines geschmolzenen Gemisches, enthaltend ein Polyamidharz, in die Form eines Blatts; und
(2) einen Streckungsschritt zum Erhalten eines gestreckten Films durch biaxiales Strecken des ungestreckten Blatts nacheinander in einer Maschinenrichtung (MD) und einer Querrichtung (TD), wobei
(3) die nachstehenden Formeln a) und b) beide erfüllt sind:

(a) $0{,}85 \leq X/Y \leq 0{,}95$
(b) $8{,}5 \leq X \times Y \leq 9{,}5$

wobei X ein Ziehverhältnis in der MD darstellt und Y ein Ziehverhältnis in der TD darstellt, und
(4) der Streckungsschritt das Strecken in der MD mit Rollen und das Strecken in der TD mit einem Spannrahmen einschließt,

wobei der Streckungsschritt das biaxiale Strecken, nacheinander umfassend:

(2-1) einen ersten Streckungsschritt des Erhaltens eines ersten gestreckten Films durch Strecken des ungestreckten Blatts in der MD bei einer Temperatur von 50°C bis 120°C; und
(2-2) einen zweiten Streckungsschritt des Erhaltens eines zweiten gestreckten Films durch Strecken des ersten gestreckten Films in der TD bei einer Temperatur von 70°C bis 150°C, beinhaltet, und
wobei der zweite gestreckte Film weiter einer Relaxationswärmebehandlung bei einer Temperatur von 180°C bis 230°C unterzogen wird.

2. Film auf Polyamidbasis, erhältlich durch das Verfahren nach Anspruch 1, wobei

(1) die Differenz zwischen dem Maximalwert und Minimalwert der jeweiligen Spannung bei 5% Dehnung, bestimmt durch einen uniaxialen Zugversuch, 35 MPa oder weniger in vier Richtungen, gebildet aus einer spezifischen Richtung von einem beliebigen Punkt in dem Film, der als 0 Grad bezeichnet ist, und Richtungen bei 45 Grad, 90 Grad und 135 Grad relativ zu der spezifischen Richtung im Uhrzeigersinn, beträgt,
(2) die Differenz zwischen dem Maximalwert und dem Minimalwert der jeweiligen Spannung bei 15% Dehnung, bestimmt durch den uniaxialen Zugversuch in den vier Richtungen, 40 MPa oder weniger beträgt, und
(3) der Wert der Standardabweichung in Bezug auf die durchschnittliche Dicke in acht Richtungen, gebildet aus einer spezifischen Richtung von einem beliebigen Punkt in dem Film, der als 0 Grad bezeichnet ist, und Richtungen bei 45 Grad, 90 Grad, 135 Grad, 180 Grad, 225 Grad, 270 Grad und 315 Grad relativ zu der spezifischen Richtung, 0,200 oder weniger beträgt.

3. Film auf Polyamidbasis nach Anspruch 2, wobei der Film auf Polyamidbasis eine durchschnittliche Dicke von 15 μm oder weniger aufweist.

4. Film auf Polyamidbasis nach Anspruch 2, wobei der Film auf Polyamidbasis eine Schrumpfung in siedendem Wasser von 2,0% bis 5,0% in einer MD und 2,5% bis 5,5% in einer TD, und einen Elastizitätsmodul von 1,5% bis 3,0% in der MD und 1,5% bis 2,5% in der TD aufweist.

5. Film auf Polyamidbasis nach Anspruch 2, wobei der Film auf Polyamidbasis eine relative Viskosität von 2,9 bis 3,1 aufweist.

6. Film auf Polyamidbasis nach Anspruch 2, wobei der Film auf Polyamidbasis eine Grundierungsschicht auf mindestens einer Seite der Filmoberfläche aufweist.

7. Laminat, umfassend: den Film auf Polyamidbasis nach Anspruch 2; und eine Metallfolie, laminiert auf/über den/dem Film.

8. Laminat, umfassend: den Film auf Polyamidbasis nach Anspruch 6; und eine Metallfolie, laminiert auf die Grundierungsschicht auf diesem Film.

9. Behälter, umfassend das Laminat nach Anspruch 7 oder 8.


**Revendications**

1. Procédé de production d'un film à base de polyamide, comprenant:

(1) une étape de moulage de feuille pour obtenir une feuille non étirée par formage d'un mélange en fusion contenant une résine de polyamide en une forme de feuille; et
(2) une étape d'étirage pour obtenir un film étiré par étirement biaxial de la feuille non étirée successivement dans un MD et une TD, dans lequel
(3) les formules suivantes a) et b) sont toutes deux satisfaites:

(a) $0,85 \leq X/Y \leq 0,95$
(b) $8,5 \leq X \times Y \leq 9,5$

où
X représente un rapport d'étirage dans le MD et Y représente un rapport d'étirage dans la TD, et
(4) l'étape d'étirage comprend l'étirage dans le MD avec des rouleaux et l'étirage dans la TD avec une rame,

dans lequel l'étape d'étirage implique l'étirage biaxial successif comprenant:

(2-1) une première étape d'étirage où l'on obtient un premier film étiré par étirage de la feuille non étirée dans le MD à une température de 50°C à 120°C; et
(2-2) une deuxième étape d'étirage où l'on obtient un deuxième film étiré par étirage du premier film étiré dans la TD à une température de 70°C à 150°C, et dans lequel le deuxième film étiré est encore soumis à un traitement thermique de relaxation à une température de 180°C à 230°C.

2. Film à base de polyamide obtenu par le procédé selon la revendication 1, dans lequel

(1) la différence entre la valeur maximale et la valeur minimale de la contrainte respective à 5% d'élongation, comme déterminé par essai de traction uniaxiale, est de 35 MPa ou moins dans quatre directions formées d'une direction spécifique d'un point arbitraire dans le film qui est désigné comme 0 degré et des directions à 45 degrés, 90 degrés et 135 degrés par rapport à la direction spécifique dans le sens des aiguilles d'une montre,
(2) la différence entre la valeur maximale et la valeur minimale de la contrainte respective à 15% d'élongation, comme c'est déterminé par essai de traction uniaxiale dans les quatre directions, est de 40 MPa ou moins, et
(3) la valeur de l'écart-type par rapport à l'épaisseur moyenne dans huit directions formées d'une direction spécifique d'un point arbitraire dans le film qui est désigné comme 0 degré et des directions à 45 degrés, 90 degrés, 135 degrés, 180 degrés, 225 degrés, 270 degrés et 315 degrés par rapport à la direction spécifique, est de 0,200 ou moins.

3. Film à base de polyamide selon la revendication 2, dans lequel le film à base de polyamide présente une épaisseur moyenne de 15 $\mu$m ou moins.

4. Film à base de polyamide selon la revendication 2, dans lequel le film à base de polyamide présente un rétrécissement à l'eau bouillante de 2,0% à 5,0% dans un MD et de 2,5 à 5,5% dans une TD, et un module d'élasticité de 1,5% à 3,0% dans le MD et de 1,5 à 2,5% dans la TD.

5. Film à base de polyamide selon la revendication 2, dans lequel le film à base de polyamide présente une viscosité relative de 2,9 à 3,1.

6. Film à base de polyamide selon la revendication 2, dans lequel le film à base de polyamide présente une couche primaire sur au moins un côté de la surface de film.

7. Stratifié comprenant: le film à base de polyamide selon la revendication 2; et une feuille de métal laminée sur/au-dessus du film.

8. Stratifié comprenant: le film à base de polyamide selon la revendication 6; et une feuille de métal laminée sur la couche primaire sur ce film.

9. Conteneur comprenant le stratifié selon la revendication 7 ou 8.

Fig. 1

Fig. 2

STRETCHING IN
LONGITUDINAL DIRECTION

STRETCHING IN
TRANSVERSE DIRECTION

Fig. 3

Fig. 4

Fig. 5

Fig. 6

**REFERENCES CITED IN THE DESCRIPTION**

**Patent documents cited in the description**

- JP 5487485 B
- JP 5226942 B
- JP 5467387 B
- JP 2011162702 A
- JP 2011255931 A
- JP 2013189614 A
- JP 5226941 B
- JP 2013022773 A

- WO 2014084248 A
- JP 3671978 B
- EP 0386759 A2
- JP H03128225 A
- US 4753842 A
- US 5939205 A
- CN 102190120 A